# EUROPEAN PATENT APPLICATION

(11) **EP 4 546 100 A1**
(43) Date of publication of application: **30.04.2025**
(21) Application number: 23878906.9
(22) Date of filing: 21.09.2023
(51) Int. Cl.: G06F 3/04817

(54) **MULTI-TASK MANAGEMENT METHOD, AND ELECTRONIC DEVICE**

(30) Priority: 20.10.2022 CN 202211289439
(71) Applicant: Huawei Technologies Co., Ltd., Shenzhen, Guangdong 518129 (CN)
(72) Inventor: HUANG, Jing, Shenzhen, Guangdong 518129 (CN); DING, Yaling, Shenzhen, Guangdong 518129 (CN)
(74) Representative: Pfenning, Meinig & Partner mbB
(86) International application number: PCT/CN2023/120442
(87) International publication number: WO 2024/082913

(57) **Abstract**

This application provides a multi-tasking management method and an electronic device, applied to the field of terminal technologies, to resolve a problem that efficiency is low because a saved multi-tasking cannot be started with one tap and used during multi-tasking management. The method includes: An electronic device generates, in response to a first operation, a quick entry corresponding to multi-tasking; the electronic device displays the quick entry corresponding to the multi-tasking; and the electronic device starts the multi-tasking in response to a second operation for the quick entry, where use status information of each service in the started multi-tasking is consistent with that before saving of the quick entry corresponding to the multi-tasking. This application is applied to a process in which the electronic device performs multi-tasking management.

## Description

This application claims priority to Chinese Patent Application No. 202211289439.1, filed with the China National Intellectual Property Administration on October 20, 2022 and entitled "MULTI-TASKING MANAGEMENT METHOD AND ELECTRONIC DEVICE", which is incorporated herein by reference in its entirety.

### TECHNICAL FIELD

This application relates to the field of terminal technologies, and in particular, to a multi-tasking management method and an electronic device.

### BACKGROUND

With the rapid development of terminal technologies, services and information provided by various terminals are increasingly rich and diversified. Users are accustomed to using a plurality of different services at the same time or processing multi-thread tasks to make better use of time and improve efficiency. A scenario in which a user uses a plurality of services at the same time is a multi-tasking scenario. For example, when the terminal is a mobile phone, the user simultaneously records a note by using a notes application in a process of playing a video by using a video application. In this case, a video playing interface and a note recording interface are simultaneously displayed on an interface of the mobile phone.

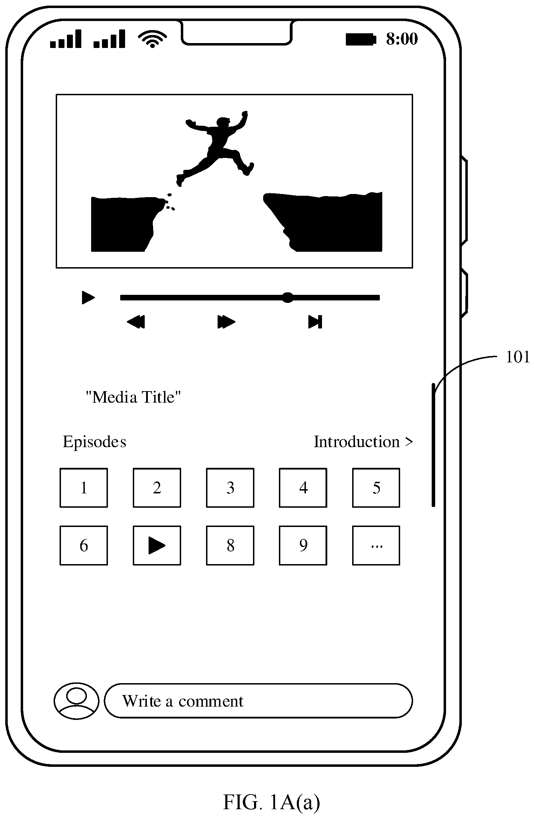

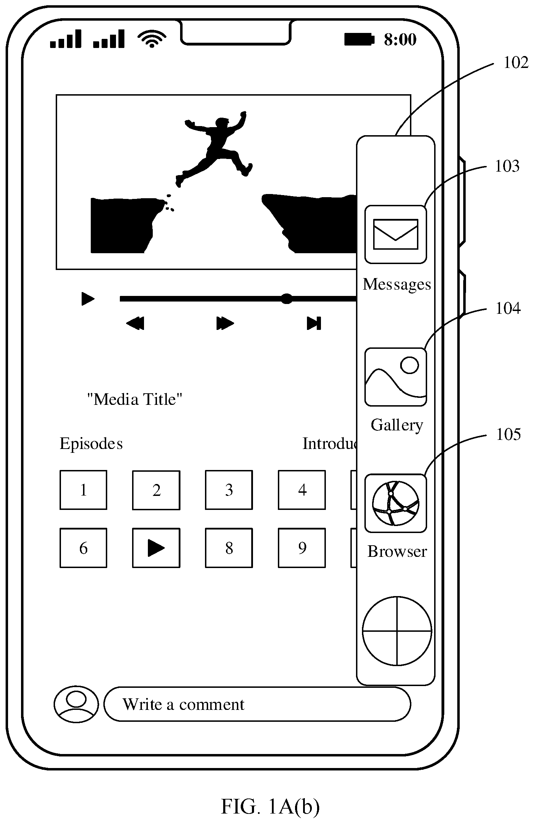

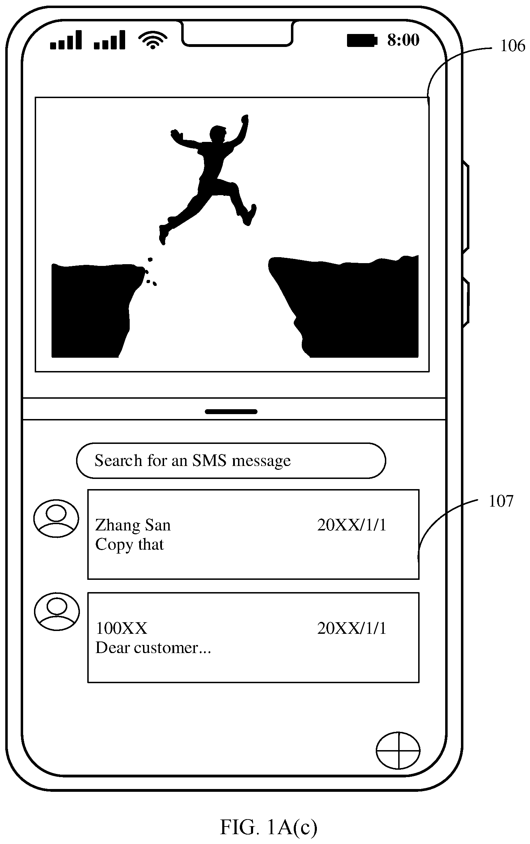

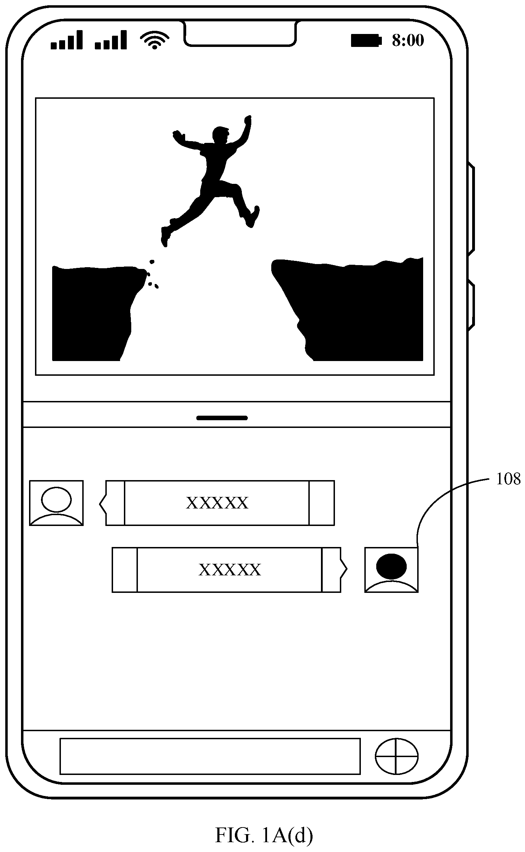

Currently, the terminal provides quick entries of different granularities and different forms, such as an application, an applet, a widget, a floating bubble, and a service widget. When the user is using a service, the user can access another service through a quick entry, to use a plurality of services at the same time, that is, enter the multi-tasking scenario. For example, as shown in FIG. 1A(a) to FIG. 1A(d), when the user watches a video, a video interface is shown in FIG. 1A(a), and the mobile phone may display a sidebar 101 at a right border of the video interface. As shown in FIG. 1A(b), after the user calls out the sidebar 101 by using a side-return and pause gesture, a sidebar interface 102 and icon information such as Messages 103, Gallery 104, and Browser 105 of a plurality of other applications included in the sidebar interface 102 are displayed at the right border of the mobile phone. Then, the user selects a target application like Messages 103 from the plurality of other applications. In this case, as shown in FIG. 1A(c), the mobile phone may simultaneously display a video interface 106 and an SMS main interface 107. The user selects a target sending object like Zhang San from the SMS main interface 107. In this case, as shown in FIG. 1A(d), the mobile phone simultaneously displays the video interface 106 and an SMS interaction interface 108 for the user and Zhang San. In the conventional technology, a plurality of services are sequentially started in a preset manner. Consequently, this process is complex, and low in efficiency, affecting user experience.

### SUMMARY

Embodiments of this application provide a multi-tasking management method and an electronic device. The electronic device adaptively generates, based on a user operation, a quick entry corresponding to multi-tasking, so that a user can start with one tap and use the multi-tasking through the quick entry. This simplifies a multi-tasking starting process and improves user experience.

To achieve the foregoing technical objective, embodiments of this application provide the following technical solutions.

According to a first aspect, a multi-tasking management method is provided. The method includes: An electronic device generates, in response to a first operation, a quick entry corresponding to multi-tasking. The electronic device displays the quick entry corresponding to the multi-tasking. The electronic device starts the multi-tasking in response to a second operation for the quick entry, where use status information of each service in the started multi-tasking is consistent with that before saving of the quick entry corresponding to the multi-tasking.

For example, a form of the quick entry includes a service widget, an icon, or a capsule. After each service is started through the quick entry, a display manner of each service includes a floating window, split screen, a floating bubble, or the like. A display location of the quick entry includes a home screen, a lock screen, a sidebar, a status bar, a drop-down shortcut bar, a leftmost screen, or a dock area.

In this way, if the electronic device is running the multi-tasking and detects the first operation, the electronic device generates the quick entry based on the current multi-tasking and saves the quick entry. Then, the user may start with one tap and use the saved multi-tasking. This simplifies a multi-tasking starting process and improves user experience.

According to the first aspect, in a possible implementation, the first operation includes a preset operation that the user actively triggers the electronic device to generate the quick entry corresponding to the multi-tasking, and the preset operation includes a preset shortcut operation or a preset voice command.

Alternatively, according to the first aspect, in a possible implementation, the first operation includes an operation that the user exits the multi-tasking.

According to the first aspect, in a possible implementation, the first operation includes the operation that the user exits the multi-tasking. Correspondingly, that an electronic device generates, in response to a first operation, a quick entry corresponding to multi-tasking includes: In response to the operation that the user exits the multi-tasking, the electronic device prompts the user whether to generate a quick entry corresponding to current multi-tasking; and when the user determines to generate the quick entry corresponding to the current multi-tasking, the electronic device generates the quick entry corresponding to the multi-tasking.

In this way, when the user exits the multi-tasking, the electronic device actively prompts the user to save the multi-tasking as the quick entry, so that the user can quickly start the multi-tasking through the quick entry next time.

In this way, when the user (for example, the user is a new user) does not know how to trigger saving of the quick entry corresponding to the multi-tasking, the user is actively prompted to save the multi-tasking, to generate the corresponding quick entry for the user to use.

According to the first aspect or any implementation of the first aspect, the first operation includes an operation that the user starts the multi-tasking through a first quick entry and then exits the multi-tasking. Correspondingly, that an electronic device generates, in response to a first operation, a quick entry corresponding to multi-tasking includes: obtaining first status information and second status information. The first status information is use status information of each service in the multi-tasking when the user starts the multi-tasking through the first quick entry. The second status information is use status information of each service in the multi-tasking when the user exits the multi-tasking. If the first status information is different from the second status information, the electronic device prompts the user whether to generate a second quick entry corresponding to current multi-tasking. When the user determines to generate the second quick entry corresponding to the current multi-tasking, the electronic device generates the second quick entry based on the second status information.

In this way, when the electronic device starts the multi-tasking and exits the multi-tasking through the quick entry, the electronic device obtains use status information of each service in the multi-tasking when the multi-tasking is started and when the multi-tasking is exited, and if the use status information of each service in the multi-tasking changes, the electronic device actively prompts the user whether to generate a new quick entry. Therefore, a quick entry can be dynamically adjusted based on a user requirement. This improves user experience.

According to the first aspect or any implementation of the first aspect, the use status information of each service in the multi-tasking includes display status information of each service in the multi-tasking and specific services included in the multi-tasking. The display status information of each service in the multi-tasking includes a display manner of each service in the multi-tasking and display interface information of each service.

According to the first aspect or any implementation of the first aspect, the quick entry corresponding to the multi-tasking meets at least one of the following conditions: a form of the quick entry is a preset form; a form of the quick entry is a form of a quick entry that is selected most frequently in a historical operation of the user; or a form of the quick entry is a form of a saved quick entry with a largest quantity in a saved quick entry in the electronic device.

In this way, the user requirement can be better met by presetting the form of the quick entry or setting the form of the quick entry according to a use habit of the user.

According to the first aspect or any implementation of the first aspect, that an electronic device generates, in response to a first operation, a quick entry corresponding to multi-tasking includes: The electronic device generates a preview screen in response to the first operation, where the preview screen includes a form of at least one quick entry; and generates, based on a target form that is of a quick entry and that is selected by the user on the preview screen, the quick entry that is of the target form and that corresponds to the multi-tasking.

According to the first aspect or any implementation of the first aspect, the preview screen further includes different specifications corresponding to quick entries of a same form. Correspondingly, that an electronic device generates a quick entry corresponding to multi-tasking includes: The electronic device generates, based on the target form and a target specification that are of the quick entry and that are selected by the user on the preview screen, the quick entry that is of the target form and the target specification and that corresponds to the multi-tasking.

According to the first aspect or any implementation of the first aspect, the preview screen further includes different display manners of each service in quick entries of a same form and a same specification. Correspondingly, that an electronic device generates a quick entry corresponding to multi-tasking includes: The electronic device generates the quick entry of the target form and the target specification based on the target form and the target specification of the quick entry and a target display manner of each service in the quick entry that are selected by the user on the preview screen, where a display manner of each service in the quick entry is the target display manner.

In this way, the electronic device generates the preview screen in response to the first operation. The preview screen provides quick entries that are of different forms and different specifications and in which display manners of each service are different. In this way, rich and diversified quick entries are provided, and different use requirements of the user can be met.

According to the first aspect or any implementation of the first aspect, that the electronic device displays the quick entry corresponding to the multi-tasking includes: The electronic device displays, at a preset display location, the quick entry corresponding to the multi-tasking.

According to the first aspect, in a possible implementation, the quick entry is displayed at a target display location based on the target display location that is selected by the user from at least one display location provided by the electronic device.

According to the first aspect or any implementation of the first aspect, the preset display location includes a uniformly preset display location; or the preset display location is a preset display location corresponding to a quick entry of each form.

According to the first aspect or any implementation of the first aspect, that the electronic device displays the quick entry corresponding to the multi-tasking includes: The electronic device determines whether a quick entry corresponding to a service combination included in the current multi-tasking exists at the preset display location or the target display location; and when the quick entry corresponding to the service combination included in the current multi-tasking does not exist at the preset display location or the target display location, the electronic device adds the quick entry corresponding to the multi-tasking to the preset display location or the target display location.

According to the first aspect or any implementation of the first aspect, when the quick entry corresponding to the service combination included in the current multi-tasking exists at the preset display location or the target display location, the electronic device adds the quick entry corresponding to the multi-tasking to the preset display location or the target display location.

According to the first aspect or any implementation of the first aspect, when the quick entry corresponding to the service combination included in the current multi-tasking exists at the preset display location or the target display location, the quick entry that corresponds to the service combination included in the current multi-tasking and that exists at the preset display location or the target display location is replaced with the quick entry corresponding to the multi-tasking.

In this way, after the electronic device determines the display location used to display the quick entry, if the quick entry corresponding to the service combination included in the current multi-tasking exists at the determined display location, the electronic device replaces the existing quick entry with the currently generated quick entry. The quick entry can be updated based on the actual situation to help the user use and improve user experience.

According to a second aspect, an embodiment of this application provides an electronic device. The electronic device includes one or more processors, a display, and a memory. The memory is coupled to the processor, the memory is configured to store computer program code, the computer program code includes computer instructions, and when the processor reads the computer instructions from the memory, the electronic device is enabled to perform the following operations: generating, in response to a first operation, a quick entry corresponding to multi-tasking; displaying the quick entry corresponding to the multi-tasking; and starting the multi-tasking in response to a second operation for the quick entry, where use status information of each service in the started multi-tasking is consistent with that before saving of the quick entry corresponding to the multi-tasking.

According to the second aspect, in a possible implementation, the first operation includes a preset operation that a user actively triggers the electronic device to generate the quick entry corresponding to the multi-tasking, and the preset operation includes a preset shortcut operation or a preset voice command.

According to the second aspect, in a possible implementation, the first operation includes an operation that a user exits the multi-tasking.

According to the second aspect or any implementation of the second aspect, the first operation includes the operation that the user exits the multi-tasking Correspondingly, that the electronic device generates, in response to a first operation, a quick entry corresponding to multi-tasking includes: In response to the operation that the user exits the multi-tasking, the electronic device prompts the user whether to generate a quick entry corresponding to current multi-tasking; and when the user determines to generate the quick entry corresponding to the current multi-tasking, the electronic device generates the quick entry corresponding to the multi-tasking.

According to the second aspect or any implementation of the second aspect, the first operation includes an operation that the user starts the multi-tasking through a first quick entry and then exits the multi-tasking. Correspondingly, that the electronic device generates, in response to a first operation, a quick entry corresponding to multi-tasking includes: obtaining first status information and second status information. The first status information is use status information of each service in the multi-tasking when the user starts the multi-tasking through the first quick entry. The second status information is use status information of each service in the multi-tasking when the user exits the multi-tasking. If the first status information is different from the second status information, the electronic device prompts the user whether to generate a second quick entry corresponding to current multi-tasking. When the user determines to generate the second quick entry corresponding to the current multi-tasking, the electronic device generates the second quick entry based on the second status information.

According to the second aspect or any implementation of the second aspect, the quick entry corresponding to the multi-tasking meets at least one of the following conditions: a form of the quick entry is a preset form; a form of the quick entry is a form of a quick entry that is selected most frequently in a historical operation of the user; or a form of the quick entry is a form of a saved quick entry with a largest quantity in a saved quick entry in the electronic device.

According to the second aspect or any implementation of the second aspect, that the electronic device generates, in response to a first operation, a quick entry corresponding to multi-tasking includes: The electronic device generates a preview screen in response to the first operation, where the preview screen includes a form of at least one quick entry; and generates, based on a target form that is of a quick entry and that is selected by the user on the preview screen, the quick entry that is of the target form and that corresponds to the multi-tasking.

According to the second aspect or any implementation of the second aspect, the preview screen further includes different specifications corresponding to quick entries of a same form. Correspondingly, that an electronic device generates a quick entry corresponding to multi-tasking includes: The electronic device generates, based on the target form and a target specification that are of the quick entry and that are selected by the user on the preview screen, the quick entry that is of the target form and the target specification and that corresponds to the multi-tasking.

According to the second aspect or any implementation of the second aspect, the preview screen further includes different display manners of each service in quick entries of a same form and a same specification. That the electronic device generates a quick entry corresponding to multi-tasking includes: The electronic device generates the quick entry of the target form and the target specification based on the target form and the target specification of the quick entry and a target display manner of each service in the quick entry that are selected by the user on the preview screen, where a display manner of each service in the quick entry is the target display manner.

According to the second aspect or any implementation of the second aspect, that the electronic device displays the quick entry corresponding to the multi-tasking includes: The electronic device displays, at a preset display location, the quick entry corresponding to the multi-tasking; or displays the quick entry at a target display location based on the target display location that is selected by the user from at least one display location provided by the electronic device.

According to the second aspect or any implementation of the second aspect, the preset display location includes a uniformly preset display location; or the preset display location is a preset display location corresponding to a quick entry of each form.

According to the second aspect or any implementation of the second aspect, that the electronic device displays the quick entry corresponding to the multi-tasking includes: The electronic device determines whether a quick entry corresponding to a service combination included in the current multi-tasking exists at the preset display location or the target display location; and when the quick entry corresponding to the service combination included in the current multi-tasking does not exist at the preset display location or the target display location, the electronic device adds the quick entry corresponding to the multi-tasking to the preset display location or the target display location.

According to the second aspect or any implementation of the second aspect, when the quick entry corresponding to the service combination included in the current multi-tasking exists at the preset display location or the target display location, the electronic device adds the quick entry corresponding to the multi-tasking to the preset display location or the target display location; or replaces, with the quick entry corresponding to the multi-tasking, the quick entry that corresponds to the service combination included in the current multi-tasking and that exists at the preset display location or the target display location.

According to the second aspect or any implementation of the second aspect, the use status information of each service in the multi-tasking includes display status information of each service in the multi-tasking and specific services included in the multi-tasking. The display status information of each service in the multi-tasking includes a display manner of each service in the multi-tasking and display interface information of each service.

According to the second aspect or any implementation of the second aspect, the form of the quick entry includes a service widget, an icon, or a capsule. The quick entries of the same form have different specifications. A display manner of each service displayed after the service is accessed through the quick entry includes a floating window, split screen, or a floating bubble. A display location of the quick entry includes a home screen, a lock screen, a sidebar, a status bar, a drop-down shortcut bar, a leftmost screen, or a dock area.

According to a third aspect, an embodiment of this application provides an electronic device. The electronic device has a function of implementing the multi-tasking management method according to the first aspect and any possible implementation of the first aspect. The function may be implemented by hardware, or may be implemented by hardware executing corresponding software. The hardware or the software includes one or more modules corresponding to the function.

According to a fourth aspect, a computer-readable storage medium is provided. The computer-readable storage medium stores a computer program (which may also be referred to as instructions or code). When the computer program is executed by an electronic device, the electronic device is enabled to perform the method according to the first aspect or any implementation of the first aspect.

According to a fifth aspect, an embodiment of this application provides a computer program product. When the computer program product runs on an electronic device, the electronic device is enabled to perform the method according to the first aspect or any implementation of the first aspect.

According to a sixth aspect, an embodiment of this application provides a circuit system. The circuit system includes a processing circuit, and the processing circuit is configured to perform the method according to the first aspect or any implementation of the first aspect.

According to a seventh aspect, an embodiment of this application provides a chip system, including at least one processor and at least one interface circuit. The at least one interface circuit is configured to perform a transceiver function, and send instructions to the at least one processor. When the at least one processor executes the instructions, the at least one processor performs the method according to the first aspect or any implementation of the first aspect.

For technical effects corresponding to the second aspect to the seventh aspect and any implementation of each aspect, refer to the technical effects corresponding to the first aspect and any implementation of the first aspect. Details are not described herein again.

### BRIEF DESCRIPTION OF DRAWINGS

FIG. 1A(a) to FIG. 1A(d) are a diagram of a process of starting multi-tasking;
FIG. 1B is a diagram of a hardware structure of an electronic device according to an embodiment of this application;
FIG. 2 is a flowchart of a multi-tasking management method according to an embodiment of this application;
FIG. 3A(a) and FIG. 3A(b) are diagrams 1 of an application scenario of a multi-tasking management method according to an embodiment of this application;
FIG. 3B(a) to FIG. 3B(c) are diagrams 2 of an application scenario of a multi-tasking management method according to an embodiment of this application;
FIG. 4(a) and FIG. 4(b) are diagrams 3 of an application scenario of a multi-tasking management method according to an embodiment of this application;
FIG. 5(a) and FIG. 5(b) are diagrams 4 of an application scenario of a multi-tasking management method according to an embodiment of this application;
FIG. 6(a) and FIG. 6(b) are diagrams 5 of an application scenario of a multi-tasking management method according to an embodiment of this application;
FIG. 7A(a) and FIG. 7A(b) are a diagram 6 of an application scenario of a multi-tasking management method according to an embodiment of this application;
FIG. 7B(a) and FIG. 7B(b) are a diagram 7 of an application scenario of a multi-tasking management method according to an embodiment of this application;
FIG. 8A(a) to FIG. 8A(c) are a diagram 8 of an application scenario of a multi-tasking management method according to an embodiment of this application;
FIG. 8B(a) to FIG. 8B(c) are a diagram 9 of an application scenario of a multi-tasking management method according to an embodiment of this application;
FIG. 9(a) and FIG. 9(b) are a diagram 10 of an application scenario of a multi-tasking management method according to an embodiment of this application; and
FIG. 10 is a diagram of a structure of an electronic device according to an embodiment of this application.

### DESCRIPTION OF EMBODIMENTS

In the descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features.

In the descriptions of embodiments of this application, unless otherwise specified, "a plurality of" means two or more than two. In embodiments of this application, the word like "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the word "example", "for example", or the like is intended to present a related concept in a specific manner.

To better understand the technical solutions provided in this application, technical terms in this application are first described.
1. A service is any executable function service in a terminal, including a service provided by a terminal system and a service provided by an application installed on the terminal. For example, the terminal is a mobile phone, and in this case, the service may be photographing, music playing, timing, or the like, or may be a service included in the application. One application may include a plurality of services, for example, a shopping application may include services such as commodity browsing, shopping cart, and payment.
2. Multi-tasking means that a terminal executes a plurality of different services at the same time. One service is called a task. It may be understood that when a user uses a service in the terminal, the terminal processes the service as a task, and executes the task to provide the service for the user, that is, the service is the task. For example, the terminal is a mobile phone. The multi-tasking may be: replying to information while watching a video, viewing a document during a video call, or the like; or using notes software while a plurality of learning materials/web pages are opened, browsing a shopping application to place an order while watching a live game, or the like.

In related technologies, there are a plurality of manners of starting multi-tasking. The following describes in detail specific implementations of starting the multi-tasking in the related technologies.

Related technology 1: An existing iOS system provides a shortcut function, and by using the shortcut function, a user may select and combine required tasks in a user-defined manner, to start a plurality of tasks with one tap and run the tasks in sequence. However, the shortcut function requires the user to manually set a running condition in advance. This setting process is complex with a high operation threshold, and is not user-friendly. In addition, the shortcut function focuses on one-tap execution of multi-tasking, but does not focus on saving, starting, and using the multi-tasking.

Related technology 2: An existing terminal system may simultaneously display two or more task interfaces in a manner like split screen or a floating window, and therefore, a user may simultaneously process multi-tasking in the foregoing manner. However, the manner like split screen and a floating window is used to display multi-tasking or assist the user in processing the multi-tasking, but cannot be used to save a use status of the multi-tasking or quickly invoke the multi-tasking.

Related technology 3: In a current multi-tasking starting manner, usually interfaces of one or more tasks are displayed on a terminal interface after a user starts the one or more tasks. The user may select a target application from a plurality of applications included in a sidebar or another location, and tap an icon of the target application, to display an interface of the target application on a currently displayed task interface of a terminal in an overlay manner, so that the user uses a plurality of tasks at the same time. However, starting multi-tasking through the sidebar is to overlay applications one by one, a new application is started in an overlay manner on the basis of starting one application, and in this way, the multi-tasking is displayed. In addition, for the newly started application, the terminal interface first displays a home screen of the target application instead of a specific task interface that the user wants to use, and therefore, the user further needs to search for a specific task from the home screen, to start the specific task interface. As shown in FIG. 1A(a) to FIG. 1A(d), for example, a target application is started through a sidebar of a mobile phone. As shown in FIG. 1A(a), the mobile phone displays a video interface and a sidebar 101. After the sidebar 101 is tapped, as shown in FIG. 1A(b), a sidebar interface 102 and icon information such as Messages 103, Gallery 104, and Browser 105 of a plurality of applications included in the sidebar interface 102 are displayed at a right border of the mobile phone in an overlay manner. After the user taps an icon of a target application, for example, Messages 103, as shown in FIG. 1A(c), the mobile phone simultaneously displays a video interface 106 that is being played and a newly started SMS main interface 107, where the SMS main interface 107 includes SMS interaction information of the user. If the user wants to send an SMS message to Zhang San, the user may search for or view SMS interaction information from Zhang San on the SMS main interface 107. Based on the SMS interaction information from Zhang San, as shown in FIG. 1A(d), the mobile phone simultaneously displays the video interface 106 and an SMS interaction interface 108 for the user and Zhang San, for sending an SMS message to Zhang San. The user needs to search for a required task on a target application interface that is started in an overlay manner. This process is complex and time-consuming.

Related technology 4: In the conventional technology, multi-tasking is displayed in a combined widget manner. Each widget may include at least one task, and a user views or uses a task corresponding to a widget based on a group of widgets. After a widget is tapped, only a task interface corresponding to the widget is displayed. A multi-tasking interface corresponding to a combined widget can be displayed only after all widgets in the combined widget are tapped. Consequently, multi-tasking cannot be started with one tap.

To resolve the problems in the existing related technologies, embodiments of this application provide a multi-tasking management method. In the method, when a terminal simultaneously executes a plurality of tasks, a quick entry corresponding to multi-tasking is generated based on use status information of each service in current multi-tasking, and the quick entry is saved. This helps a user start with one tap and use the saved multi-tasking, to save time and effort and improve user experience.

Embodiments of this application provide a multi-tasking management method, where the method may be applied to an electronic device. For example, the electronic device in embodiments of this application may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), an artificial intelligence (artificial intelligence, AI) terminal, or the like, which is not limited in embodiments of this application.

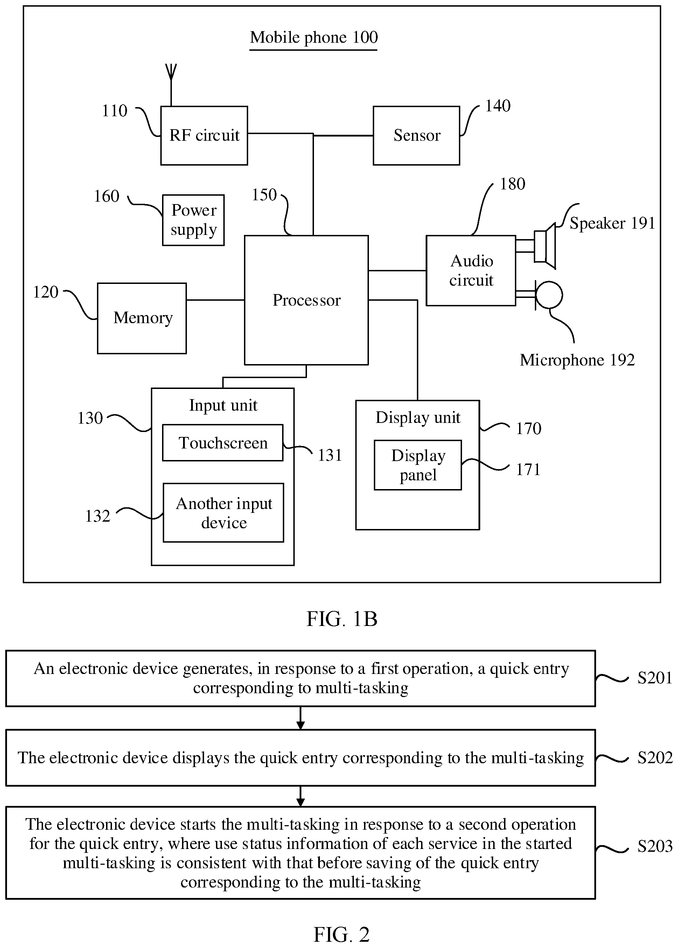

For example, the electronic device is the mobile phone. As shown in FIG. 1B, a mobile phone 100 includes components such as a radio frequency (radio frequency, RF) circuit 110, a memory 120, an input unit 130, one or more sensors 140, a processor 150, a power supply 160, a display unit 170, and an audio circuit 180. A person skilled in the art can understand that a mobile phone structure shown in FIG. 1B does not constitute any limitation on the mobile phone, and the mobile phone may include more or fewer components than those shown in the figure, or combine some components, or have a different component arrangement.

The following separately describes functional components of the mobile phone 100.

The RF circuit 110 may be configured to send and receive signals in an information sending and receiving process or in a call process. Particularly, the RF circuit 110 receives downlink information from a base station, then delivers the downlink information to the processor 150 for processing, and additionally sends uplink data to the base station. Generally, the RF circuit 110 includes but is not limited to an antenna, at least one amplifier, a transceiver, a coupler, a low noise amplifier (low noise amplifier, LNA), a duplexer, or the like. In addition, the RF circuit 110 may further communicate with a network and another device through wireless communication. The wireless communication may use any communication standard or protocol, including but not limited to global system for mobile communications (global system of mobile communications, GSM), a general packet radio service (general packet radio service, GPRS), code division multiple access (code division multiple access, CDMA), wideband code division multiple access (wideband code division multiple access, WCDMA), long term evolution (long term evolution, LTE), an email, a short message service (short message service, SMS), and the like.

The memory 120 may be configured to store a software program and module. The processor 150 runs the software program and module stored in the memory 120, to implement various functional applications and data processing of the mobile phone 100. The memory 120 may mainly include a program storage area and a data storage area. The program storage area may store an operating system, an application (application, APP) required by at least one function, and the like, for example, a sound playing function and an image playing function. The data storage area may store data (for example, status information of each service in multi-tasking, display information of each service in the multi-tasking, and a quick entry corresponding to the multi-tasking) and the like created according to the use of the mobile phone 100. In addition, the memory 120 may include a high-speed random access memory, or may include a nonvolatile memory, such as at least one magnetic disk storage device, a flash memory device, or another volatile solid-state storage device.

The input unit 130 may be configured to: receive digital or character information input by the user, and generate a key signal input related to a user setting and function control of the mobile phone 100. The input unit may receive an operation input by the user, and trigger the electronic device to quickly save status information of each service in the multi-tasking and display information of each service. Specifically, the input unit 130 may include a touchscreen 131 and another input device 132. The touchscreen 131 is also referred to as a touch panel, and may collect a touch operation (for example, an operation performed by the user on or near the touchscreen 131 by using any proper object or accessory such as a finger or a stylus) performed by the user on or near the touchscreen 131, and drive a corresponding connection apparatus by using a preset program. Optionally, the touchscreen 131 may include two parts: a touch detection apparatus and a touch controller. The touch detection apparatus detects a touch orientation of the user, detects a signal generated by a touch operation, and sends the signal to the touch controller. The touch controller receives touch information from the touch detection apparatus, converts the touch information into touch point coordinates, then sends the touch point coordinates to the processor 150, receives a command sent by the processor 150, and execute the command. In addition, the touchscreen 131 may be implemented in various types such as a resistance type, a capacitance type, an infrared type, and a surface acoustic wave type. In addition to the touchscreen 131, the input unit 130 may include another input device 132. Specifically, the another input device 132 may include but is not limited to one or more of a physical keyboard, a function key (such as a volume control key or a power on/off key), a trackball, a mouse, a joystick, and the like.

The sensors 140 include sensors configured to recognize biological features, such as a fingerprint recognition sensor, a facial recognition sensor, and an iris recognition sensor. The fingerprint recognition sensor is used as an example. The fingerprint recognition sensor can collect fingerprint information of the user and report the collected fingerprint information to the processor 150, and the processor 150 performs identity recognition on the user based on the fingerprint information.

The sensors 140 further include a gravity sensor (gravity sensor), which may detect a value of acceleration of the mobile phone in each direction (generally tri-axis), may detect a value and a direction of gravity when the mobile phone is motionless, and may be used in a posture recognition application of the mobile phone (for example, switching between landscape orientation and portrait orientation, a related game, or magnetometer posture calibration), a function related to vibration recognition (for example, a pedometer or a stroke), or the like.

The mobile phone 100 may further include another sensor, for example, an optical sensor. Specifically, the optical sensor may include an ambient light sensor and an optical proximity sensor. The ambient light sensor may adjust brightness of the display panel 171 based on brightness of ambient light. The proximity sensor may detect whether there is an object approaching or touching the mobile phone, and may turn off the display panel 171 and/or backlight when the mobile phone 100 is moved to an ear. A gyroscope, a barometer, a hygrometer, a thermometer, an infrared sensor, and other sensors may be further configured for the mobile phone 100. Details are not described herein.

The display unit 170 may be configured to display information input by the user or information provided for the user, and various menus of the mobile phone 100. The display unit may display an interface of each task in the multi-tasking and a quick entry corresponding to the multi-tasking. The display unit 170 may include a display panel 171. Optionally, the display panel 171 may be configured in the form of a liquid crystal display (liquid crystal display, LCD), an organic light-emitting diode (organic light-emitting diode, OLED), or the like. Further, the touchscreen 131 may cover the display panel 171. After detecting a touch operation on or near the touchscreen 131, the touchscreen 131 transfers the touch operation to the processor 150, to determine a type of a touch event. Then, the processor 150 provides a corresponding visual output on the display panel 171 based on the type of the touch event. Although the touchscreen 131 and the display panel 171 in FIG. 1B are used as two independent components to implement input and output functions of the mobile phone 100, in some embodiments, the touchscreen 131 and the display panel 171 may be integrated to implement the input and output functions of the mobile phone 100.

The audio circuit 180, a speaker 191, and a microphone 192 may provide an audio interface between the user and the mobile phone 100. The audio circuit 180 may convert received audio data into an electrical signal, and transmit the electrical signal to the speaker 191. The speaker 191 converts the electrical signal into a sound signal and outputs the sound signal. The microphone 192 converts a collected sound signal into an electrical signal. The audio circuit 180 receives the electrical signal, converts the electrical signal into audio data, and then outputs the audio data to the RF circuit 110, so that the RF circuit 110 sends the audio data to, for example, another mobile phone, or outputs the audio data to the memory 120 for further processing.

The processor 150 is a control center of the mobile phone 100, and is connected to various parts of the mobile phone by using various interfaces and lines. By running or executing the software program and/or the module stored in the memory 120, and invoking data stored in the memory 120, the processor 150 performs various functions and data processing of the mobile phone 100, thereby performing overall monitoring on the mobile phone. The processor 150 may save the multi-tasking in the form of a quick entry in response to a preset operation transmitted by the input unit 130. Optionally, the processor 150 may include one or more processing units. Optionally, the processor 150 may integrate an application processor and a modem processor. The application processor mainly processes an operating system, a user interface, an application, and the like. The modem processor mainly processes wireless communication. It should be understood that the modem processor may not be integrated into the processor 150.

The mobile phone 100 further includes a power supply 160 (such as a battery) for supplying power to the components. Optionally, the power supply may be logically connected to the processor 150 by using a power management system, thereby implementing functions such as charging, discharging, and power consumption management by using the power management system.

Although not shown, the mobile phone 100 may further include an antenna, a wireless-fidelity (wireless-fidelity, Wi-Fi) module, a near field communication (near field communication, NFC) module, a Bluetooth module, a speaker, an accelerometer, a gyroscope, and the like.

The multi-tasking management method provided in embodiments of this application may be applied to any electronic device like the mobile phone shown in FIG. 1B. In some embodiments of this application, FIG. 2 is a flowchart of a multi-tasking management method according to an embodiment of this application. The method includes the following steps.

S201: An electronic device generates, in response to a first operation, a quick entry corresponding to multi-tasking.

In some embodiments of this application, the first operation includes a preset operation that a user actively triggers the electronic device to generate a quick entry corresponding to current multi-tasking, and the preset operation includes a preset shortcut operation or a preset voice command. The electronic device generates, in response to the preset operation and based on use status information of each service in the current multi-tasking, the quick entry corresponding to the multi-tasking. For specific implementation of this manner, refer to the following.

In some other embodiments of this application, the first operation may alternatively be an operation for triggering the electronic device to actively prompt a user to save current multi-tasking as a quick entry.

Optionally, the first operation is an operation that a user exits the multi-tasking.

In some implementations, when the user exits the multi-tasking, the electronic device directly prompts the user to generate, based on use status information of each service in current multi-tasking, the quick entry corresponding to the multi-tasking. For specific implementation of this manner, refer to the following.

In some other implementations, when the user exits the multi-tasking after finishing using each service in the started multi-tasking, the electronic device receives an exit operation, obtains use status information of each service in current multi-tasking, and determines a comparison result of use status information of each service in the multi-tasking before and after use. If the use status information of each service in the multi-tasking before and after use of the user is different, the electronic device prompts the user whether to generate the quick entry (if a quick entry corresponding to the multi-tasking is already saved before the multi-tasking is used, generating a quick entry may alternatively be understood as updating an existing quick entry). When the user determines to generate the quick entry corresponding to the current multi-tasking, the electronic device generates the quick entry based on the use status information of each service in the multi-tasking when exiting the multi-tasking. For specific implementation of this manner, refer to the following.

In some embodiments of this application, the quick entry that corresponds to the multi-tasking and that is generated by the electronic device based on the use status information of each service in the current multi-tasking after the electronic device receives the first operation meets at least one of the following conditions: a form of the quick entry is a preset form; a form of the quick entry is a form of a quick entry that is selected most frequently in a historical operation of the user; or a form of the quick entry is a form of a saved quick entry with a largest quantity in a saved quick entry in the electronic device.

In some embodiments of this application, the electronic device generates a preview screen in response to the first operation. On the preview screen, one or more options such as different forms, different specifications, or different display locations of a quick entry, or different display manners of each service in the quick entry that are supported by the electronic device are displayed. The quick entry is generated based on an option selected by the user.

In some implementations, the electronic device generates the preview screen in response to the first operation, where the preview screen includes a form of at least one quick entry; and generates, based on a target form that is of a quick entry and that is selected by the user on the preview screen, the quick entry that is of the target form and that corresponds to the multi-tasking. For specific implementation of this manner, refer to the following.

In some other implementations, the preview screen further includes different specifications corresponding to quick entries of a same form. The electronic device generates, based on the target form and a target specification that are of the quick entry and that are selected by the user on the preview screen, the quick entry that is of the target form and the target specification and that corresponds to the multi-tasking. For specific implementation of this manner, refer to the following.

In some other implementations, the preview screen further includes different display manners of each service in quick entries of a same form and a same specification. The electronic device generates the quick entry of the target form and the target specification based on the target form and the target specification of the quick entry and a target display manner of each service in the quick entry that are selected by the user on the preview screen, where a display manner of each service in the quick entry is the target display manner. For specific implementation of this manner, refer to the following.

In embodiments of this application, the use status information of each service in the multi-tasking includes display status information of each service in the multi-tasking and specific services included in the multi-tasking.

The display status information of each service in the multi-tasking may be a display manner of each service in the multi-tasking and display interface information of each service.

The display manner of each service may be a display manner of a floating window, split screen, a floating bubble, or the like. The floating window or the floating bubble means that if a display manner of a service in a plurality of services included in the current multi-tasking is the floating window or the floating bubble, it is considered that the whole display manner of the current multi-tasking is the floating window or the floating bubble. The display interface information of each service includes a location, a display ratio, a size, and the like of each service display interface on a display.

For example, when the multi-tasking includes at least two services such as a first service and a second service, a display manner of the at least two services is split screen, a floating window, or another display manner. Split-screen display is used as an example. When the at least two services are displayed in split screen, display interface information of each service includes a display location, a display ratio, and the like of each service.

For another example, the current multi-tasking includes two services such as a first service and a second service, and the first service and the second service are displayed in split screen. The first service is close to a side edge (for example, an upper horizontal side edge) of the display, and the second service is close to another side edge (a lower horizontal side edge) of the display. A display ratio of the first service to the second service is 2:1 or the like. The upper horizontal side edge of the display is a side edge that is parallel to the horizontal line and that is far away from the horizontal line when a mobile phone is vertically placed. Correspondingly, the lower horizontal side edge on the display is a side edge that is parallel to the horizontal line and that is close to the horizontal line when the mobile phone is vertically placed.

In embodiments of this application, a quick entry is used to quickly start a saved multi-tasking. A form of the quick entry includes a shortcut service widget, an icon, a capsule, or another form. Quick entries of a same form may have different specifications. For example, a specification of the shortcut service widget may be 2*1, 2*2, 4*1, or 4*2. The display manner of each service in the quick entry includes a floating window, split screen, a floating bubble, or the like. A display location of the quick entry may include but is not limited to a home screen, a lock screen, a sidebar, a status bar, a drop-down shortcut bar, a leftmost screen, a dock area, or the like.

S202: The electronic device displays the quick entry corresponding to the multi-tasking.

In some embodiments of this application, the electronic device displays, at a preset display location, the quick entry corresponding to the multi-tasking (which may also be understood as saving, at the preset display location, the quick entry corresponding to the multi-tasking); or displays the quick entry at a target display location based on the target display location that is selected by the user from at least one display location provided by the electronic device. For specific implementation of this manner, refer to the following.

In embodiments of this application, the preset display location includes a uniformly preset display location, or the preset display location is a preset display location corresponding to a quick entry of each form. For specific implementation of this manner, refer to the following.

In some embodiments of this application, the electronic device determines the preset display location or the target display location of the quick entry corresponding to the multi-tasking, detects whether any quick entry corresponding to a service combination included in the current multi-tasking exists at the preset display location or the target display location, and saves the newly generated quick entry at the preset display location or the target display location based on a detection result. For specific implementation of this manner, refer to the following.

In some implementations, the electronic device determines whether a quick entry corresponding to the service combination included in the current multi-tasking exists at the preset display location or the target display location.

When the quick entry corresponding to the service combination included in the current multi-tasking does not exist at the preset display location or the target display location, the electronic device adds the quick entry corresponding to the multi-tasking to the preset display location or the target display location.

When the quick entry corresponding to the service combination included in the current multi-tasking exists at the preset display location or the target display location, the electronic device adds the quick entry corresponding to the multi-tasking to the preset display location or the target display location; or replaces, with the quick entry corresponding to the multi-tasking, the quick entry that corresponds to the service combination included in the current multi-tasking and that exists at the preset display location or the target display location. For specific implementation of this manner, refer to the following.

After the electronic device saves the quick entry corresponding to the multi-tasking, the user may quickly start the saved multi-tasking through the quick entry. In other words, if a quick entry of a form like a shortcut service widget, an icon, a capsule, or another form is used as the quick entry, and the saved multi-tasking may be quickly started through the quick entry. That is, S203 is performed.

S203: The electronic device starts the multi-tasking in response to a second operation for the quick entry, where use status information of each service in the started multi-tasking is consistent with that before saving of the quick entry corresponding to the multi-tasking.

The second operation may be various preset operations for the quick entry. Optionally, the second operation may be some shortcut operations of the user, for example, a shortcut operation in a manner of a gesture, a button combination, or the like. For example, when the quick entry is the shortcut service widget, the second operation is an operation of tapping the shortcut service widget. Alternatively, the second operation may be a voice command of the user, for example, a command for starting a quick entry that is delivered to the mobile phone through a voice assistant. A specific implementation of the second operation is not limited in embodiments of this application.

The multi-tasking management method provided in embodiments of this application helps the user start with one tap and use the saved multi-tasking, to increase a multi-tasking invoking speed and greatly improve user experience.

The following gives descriptions by using an example in which the electronic device to which the method provided in embodiments of this application is applied is the mobile phone 100 shown in FIG. 1B.

In a possible implementation, the mobile phone receives a preset operation of a user, and generates, in response to the preset operation and based on use status information of each service in current multi-tasking, a quick entry corresponding to multi-tasking.

The preset operation includes various preset operations that can trigger the mobile phone to save the current multi-tasking. Optionally, the preset operation may be some shortcut operations of the user, for example, a shortcut operation in a manner of a gesture, a button combination, or the like. Alternatively, the preset operation may be a voice command of the user, for example, a command for saving the current multi-tasking that is delivered to the mobile phone through a voice assistant. A specific implementation of the preset operation is not limited in this embodiment of this application.

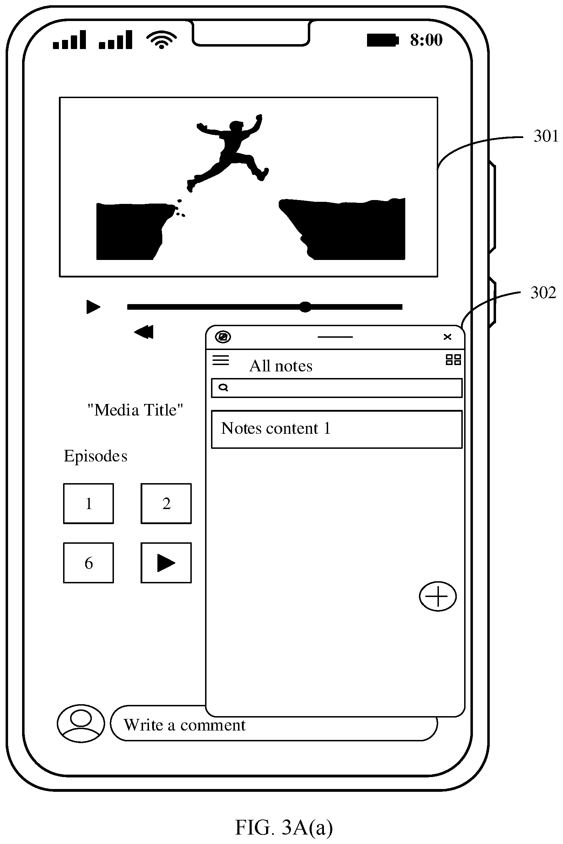

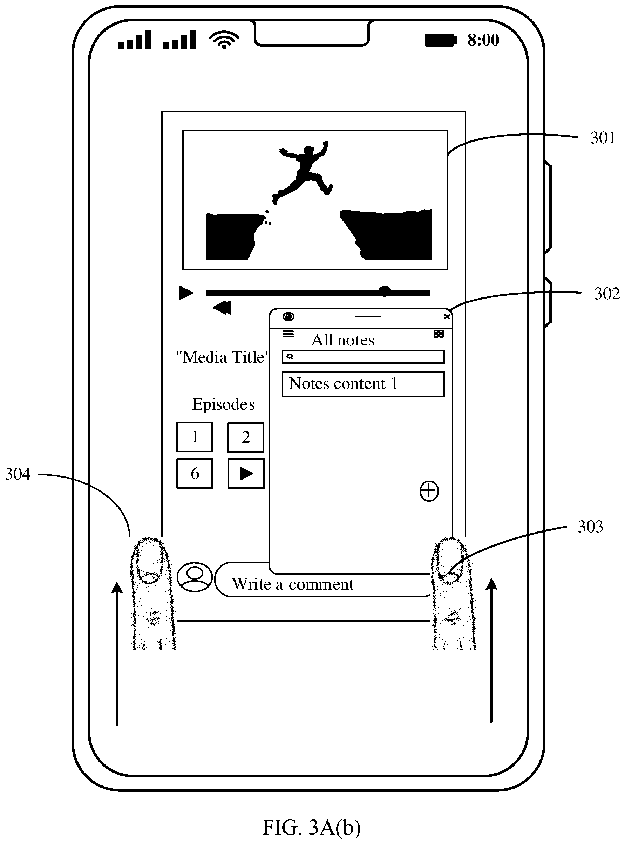

For ease of description, in this embodiment of this application, the use status information of each service in the current multi-tasking is described as first status information. The first status information is real-time use status information of each service in the multi-tasking in the mobile phone when the mobile phone is triggered to generate the quick entry corresponding to the current multi-tasking. In addition, if the user starts multi-tasking corresponding to the saved quick entry, use status information of each service in the started multi-tasking is consistent with use status information of each service in the multi-tasking before the electronic device saves the quick entry corresponding to the multi-tasking. In other words, the first status information is the use status information of each service in the multi-tasking when the user starts the multi-tasking through the quick entry. For example, as shown in FIG. 3A(a), when the mobile phone plays a video on a video interface 301, the user uses a small window to display a notes interface 302 in a lower right corner of the video interface, and in this case, the mobile phone simultaneously displays the video interface 301 and the notes interface 302 in a display manner of a floating window. In this process, as shown in FIG. 3A(b), the mobile phone receives a preset operation input by the user, for example, the user slides up a preset distance simultaneously with a right hand 303 and a left hand 304 on a display of the mobile phone.

After detecting the preset operation input by the user, the mobile phone generates a preview screen, and displays, on the preview screen, the quick entry generated based on the first status information.

The preview screen provides one or more forms of quick entries. Optionally, the one or more forms of quick entries are forms that can be supported by the mobile phone.

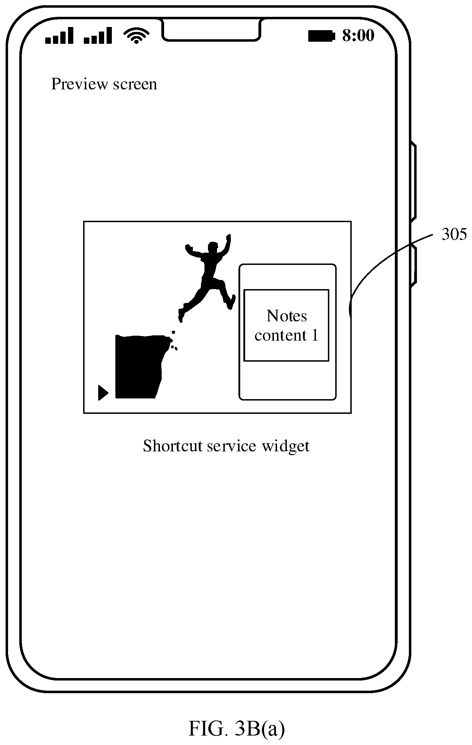

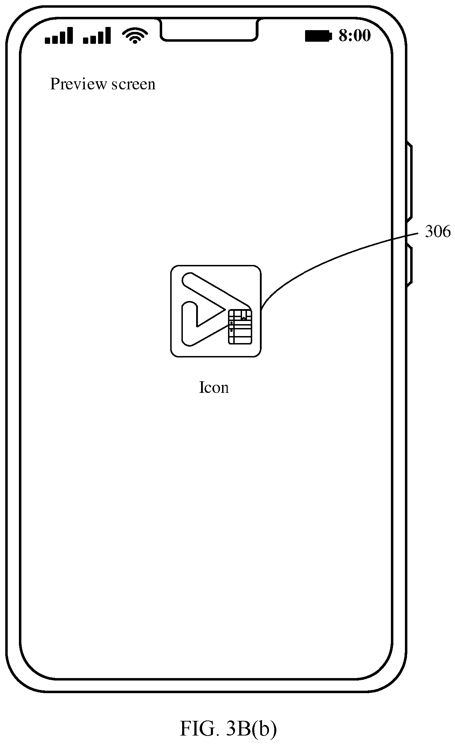

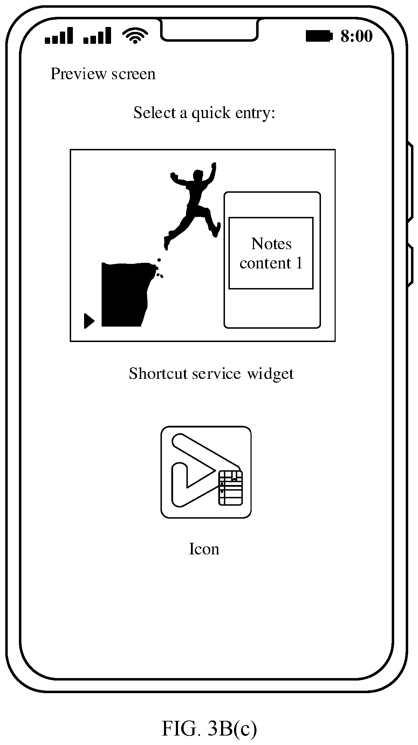

For example, as shown in FIG. 3B(a), the quick entry is a shortcut service widget. A shortcut service widget 305 is the quick entry of the multi-tasking that is shown in FIG. 3A(a) and that is generated in a form of a widget. For another example, the quick entry is an icon shown in FIG. 3B(b). An icon 306 is generated by integrating an icon of a video service with an icon of a notes service based on the multi-tasking shown in FIG. 3A(a). For another example, a form of the quick entry may be another form like a capsule.

In an implementation of the preview screen, the preview screen includes a preset quick entry, and the preset quick entry may be a quick entry preset in the mobile phone. A form of the preset quick entry may be any one of the forms shown in FIG. 3B(a) or FIG. 3B(b), or the another form.

Optionally, the mobile phone determines, based on a historical operation that the user selects a form of a quick entry, a form of a quick entry that is selected most frequently as the preset quick entry. That is, the form of the quick entry is the same as the form of the quick entry that is selected most frequently in the historical operation of the user. For example, through statistics of the mobile phone, a form of a quick entry that is selected most frequently by the user during saving of multi-tasking is an icon, and in this case, when the mobile phone saves the multi-tasking, the quick entry is saved as an icon form.

Optionally, the mobile phone may further count quantities of different forms of saved quick entries, and determine a form of a saved quick entry with a largest quantity as the form of the preset quick entry.

In another implementation of the preview screen, the preview screen includes a plurality of forms of quick entries. As shown in FIG. 3B(c), the preview screen includes a shortcut service widget 305 and an icon 306. The user may select a form of a quick entry from the plurality of forms of quick entries provided on the preview screen, and the mobile phone generates the quick entry based on the form finally selected by the user.

In a possible implementation, a form of the quick entry is preset. When receiving the preset operation of the user, the mobile phone directly generates a quick entry based on the first status information and the preset form. For example, a form of the quick entry is preset as the shortcut service widget. After detecting the preset operation of the user, the mobile phone directly generates a shortcut service widget based on the first status information. In this implementation, the preview screen may not be displayed.

Optionally, a display location and a display sequence of a quick entry on the preview screen may be obtained according to a specific priority rule. For example, the quick entry that is selected most frequently by the user in the historical operation may be preferentially displayed, or may be displayed at an obvious location. For example, a priority of the shortcut service widget is 1, and a priority of the icon is 2. If only one quick entry is displayed on the preview screen, the shortcut service widget is preferentially displayed. If a quantity of quick entries is not limited, quick entries in different forms such as the shortcut service widget and the icon may be sequentially displayed based on a priority sequence. A layout form of the preview screen is not limited in embodiments of this application.

Optionally, quick entries of a same form may also have different specifications. For example, for the shortcut service widget, the mobile phone may provide shortcut service widgets of different sizes and different specifications, such as 2*1, 2*2, 4*1, or 4*2. For example, a display layout of a home screen of the mobile phone is 4*6, and may be abstracted as a rectangle with a width of 4 and a length of 6. A shortcut service widget of the specification of 2*1 may be abstracted as a rectangle with a width of 2 and a length of 1, and a shortcut service widget of the specification of 2*2 may be abstracted as a square with a width of 2 and a length of 2.

Optionally, the different specifications of the quick entries of a same form are specifications that can be supported by the mobile phone.

In still another implementation of the preview screen, a preview image (described as a first preview image for ease of description in this embodiment of this application) for different forms of quick entries is provided, and a preview image (described as a second preview image for ease of description in this embodiment of this application) for a specific specification and a specific form of a quick entry is further provided.

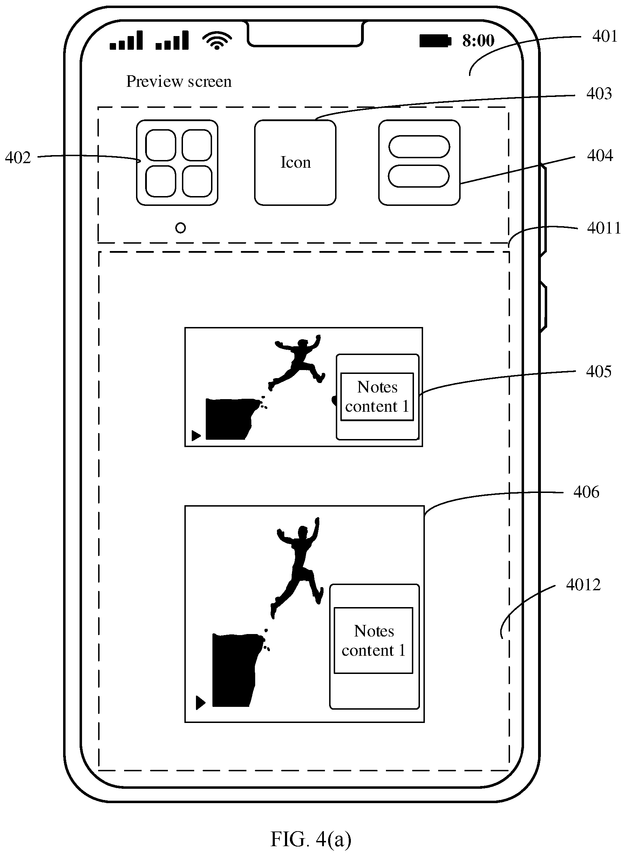

For example, as shown in FIG. 4(a), the mobile phone displays a preview screen 401, and the preview screen 401 includes a first preview image 4011 and a second preview image 4012. The first preview image 4011 includes different forms of quick entries, for example, a shortcut service widget 402, an icon 403, and a capsule 404. If the user selects a quick entry of the form of the shortcut service widget 402, the mobile phone displays a small circle below the shortcut service widget 402 to indicate that the user selects the form. Correspondingly, the second preview image 4012 includes shortcut service widgets of different specifications, for example, a shortcut service widget 405 of a 2*1 specification and a shortcut service widget 406 of a 2*2 specification. The user may further select a specification of the shortcut service widget from 4012. The mobile phone generates a quick entry based on a form of the quick entry that is finally selected by the user and a specification of the form of the quick entry. In this embodiment of the present invention, a form in which the mobile phone displays an option selected by the user is not limited, and the option selected by the user may be represented in any form, for example, the foregoing small circle, a check box, or another form.

Similarly, if the user selects a quick entry of the form of the icon 403 on the preview screen 401, the second preview image 4012 includes icons of different sizes or formats (not shown in the figure).

In addition, the user may view quick entries of different forms on the preview screen in a manner like sliding.

Optionally, each service in the quick entry may be displayed in a plurality of manners. For example, for the shortcut service widget, a display manner such as a floating window, split screen, or a floating bubble may be provided. Optionally, the display manner is a display manner supported by the mobile phone.

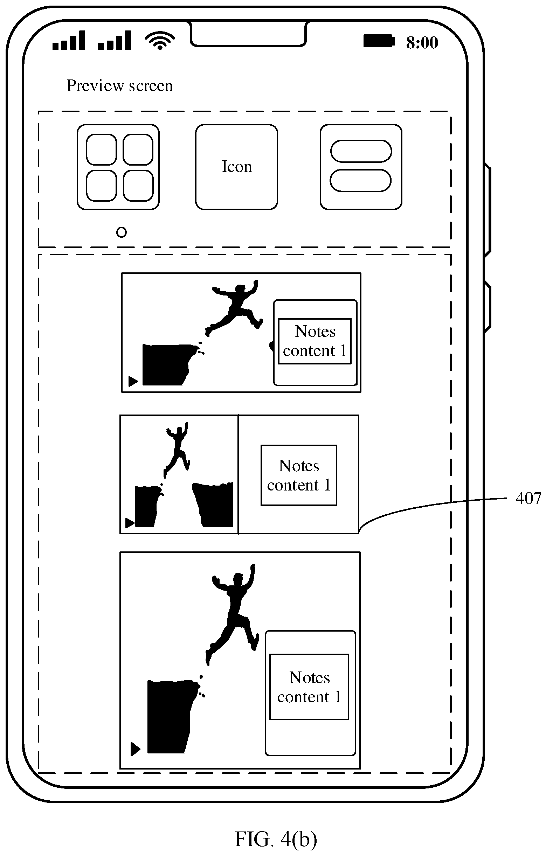

For example, as shown in FIG. 4(b), the preview screen 401 of the mobile phone includes a first preview image 4011 and a second preview image 4012. A preview effect in the first preview image 4011 is described above, and details are not described again. If the user selects a quick entry of the form of the shortcut service widget 402, shortcut service widgets of different specifications and different display manners may be presented in the corresponding second preview image 4012, for example, a shortcut service widget 405 that is of a 2*1 specification and in which one service is displayed on another service in a floating manner, a shortcut service widget 407 that is of a 2*1 specification and in which two services are displayed in split screen, and a shortcut service widget 406 that is of a 2*2 specification and in which one service is displayed on another service in a floating manner. The mobile phone provides more shortcut service widgets for the user to select, and generates a quick entry based on a form of the quick entry finally selected by the user, a specification of the form of the quick entry, and a display manner of each service in the quick entry.

In still another implementation of the preview screen, a preview image (described as a third preview image for ease of description in this embodiment of this application) for different display manners of services in the quick entry is provided, and a preview image (described as a fourth preview image for ease of description in this embodiment of this application) for different specifications and different forms of quick entries in a specific display manner is further provided.

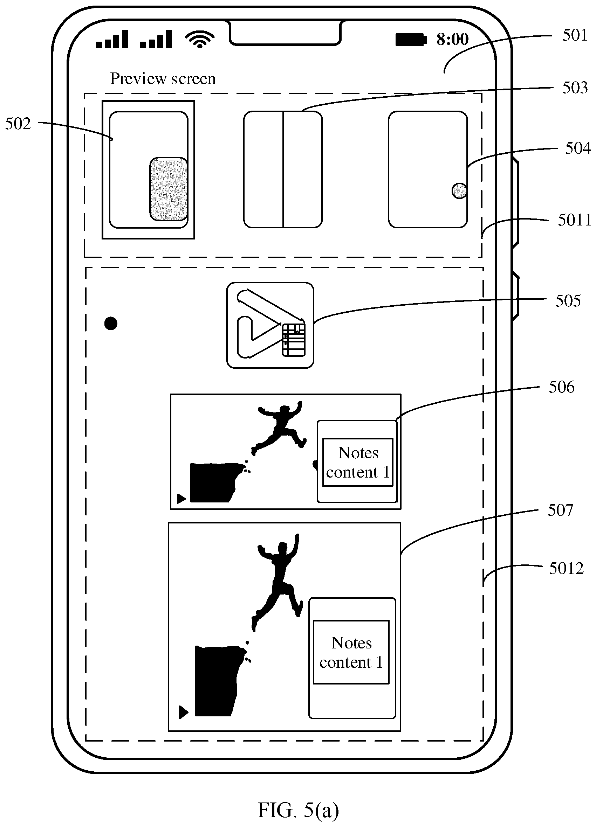

For example, as shown in FIG. 5(a), the mobile phone displays a preview screen 501, and the preview screen 501 includes a third preview image 5011 and a fourth preview image 5012. The third preview image 5011 includes different display manners of each service in the quick entry, for example, a floating window 502, split screen 503, and a floating bubble 504. If the user selects the display manner of the floating window 502, the fourth preview image 5012 correspondingly includes different specifications and different forms of quick entries in the display manner of the floating window. In other words, a display manner of each service in each quick entry in the fourth preview image 5012 is the floating window selected by the user in the third preview image 5011, for example, an integrated icon 505 in which one service icon is displayed on another service icon in a floating manner, a shortcut service widget 506 that is of a 2*1 specification and in which one service is displayed on another service in a floating manner, and a shortcut service widget 507 that is of a 2*2 specification and in which one service is displayed on another service in a floating manner. If the user taps the integrated icon 505 in which one service icon is displayed on another service icon in a floating manner, the mobile phone generates a quick entry according to the operation. The mobile phone generates a quick entry based on a display manner of each service in the quick entry finally selected by the user and a specification and a form of the quick entry in the display manner.

Optionally, the mobile phone determines, based on the first status information saved by the user, a current display manner of each service in the multi-tasking as a preset display manner of each service in the quick entry. That is, a display manner of each service in the quick entry is the same as a display manner of each service in current multi-tasking.

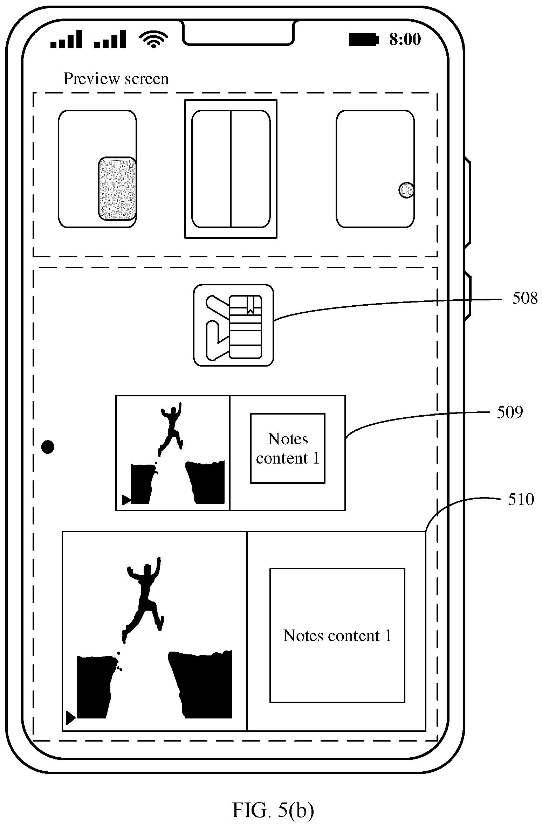

For example, in the multi-tasking shown in FIG. 3A(a), the display manner of each service in the current multi-tasking is the floating window. The mobile phone detects an operation of sliding up a preset distance with two hands of the user, and then generates the preview screen shown in FIG. 5(a). By default, the preset display manner, namely, the floating window 502, is selected for each service in the quick entry on the preview screen, and the display manner of each service in the quick entry on the preview screen is the floating window. If the user taps the split screen 503, the preview screen is shown in FIG. 5(b), and a display manner of each service in the quick entry on the preview screen is switched to split screen, for example, an integrated icon 508 in which two service icons are displayed in split screen, a shortcut service widget 509 that is of a 2*1 specification and in which two services are displayed in split screen, and a shortcut service widget 510 that is of a 4*2 specification and in which two services displayed in split screen. If the user taps the shortcut service widget 509 that is of a 2*1 specification and in which two services displayed in split screen, a quick entry generated by the mobile phone is a shortcut service widget that is of the 2*1 specification and in which two services are displayed in split screen. The mobile phone generates a quick entry based on a display manner of each service in the quick entry finally selected by the user and a form and a specification of the quick entry in the display manner.

Optionally, after generating the quick entry, the mobile phone determines a display location of the newly generated quick entry.

In a possible implementation, a display location is preset for the quick entry. After generating the quick entry, the mobile phone directly saves the quick entry to a uniformly preset display location (namely, a preset display location). For example, if a display location of the quick entry is preset as a home screen, the generated quick entry is saved on the home screen regardless of a form of the generated quick entry. Optionally, the mobile phone may preset a different display location for a quick entry that if of each form. After generating a quick entry, the mobile phone saves the quick entry to a corresponding preset display location based on a form of the quick entry.

In another possible implementation, a plurality of display locations are provided for the quick entry. Optionally, after generating the quick entry, the mobile phone provides the user with at least one display location of the newly generated quick entry, and determines a target display location of the quick entry according to selection of the user.

In an implementation of prompting the user, after generating the quick entry, the mobile phone may send, to the user, a voice instruction for selecting a display location. For example, after a quick entry is generated, the mobile phone sends, to the user by using a voice assistant, "Please select a display location. Add to home screen, reply 1. Add to lock screen, reply 2. Add to sidebar, reply 3... Please say". The mobile phone saves the quick entry according to a number replied by the user.

In another implementation of prompting the user, a display location option of the quick entry may be further displayed on the preview screen. Optionally, different form of quick entries may have different display locations. For example, the shortcut service widget may be added to the home screen, the lock screen, the leftmost screen, or the like; and the icon may be saved to the home screen, the sidebar, a dock, or the like. The display location is a location that is in the mobile phone and that supports saving and displaying of a quick entry. Optionally, the display location of the quick entry is related to the form of the quick entry.

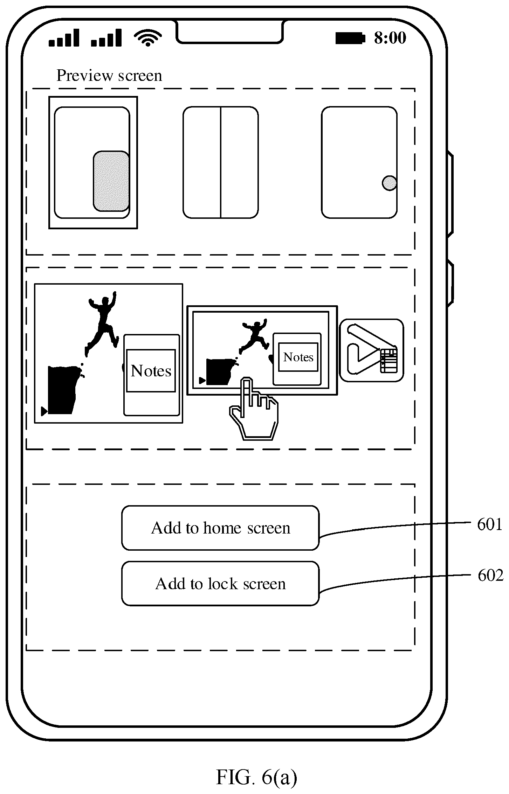

For example, based on the preview screen shown in FIG. 5(a) and FIG. 5(b), an option of the display location of the quick entry is further provided. As shown in FIG. 6(a), the user may slide left or right on a screen to view the quick entry in the fourth preview image. If the user taps the shortcut service widget that is of a 2*1 specification and in which one service is displayed on another service in a floating manner, an option of a display location that supports saving of a shortcut service widget is displayed below the fourth preview image, for example, "Add to home screen" 601 or "Add to lock screen" 602. After the user selects the quick entry, the mobile phone provides, for the user, an option of a display location at which the quick entry selected by the user is saved, and saves the quick entry based on a target display location finally selected by the user.

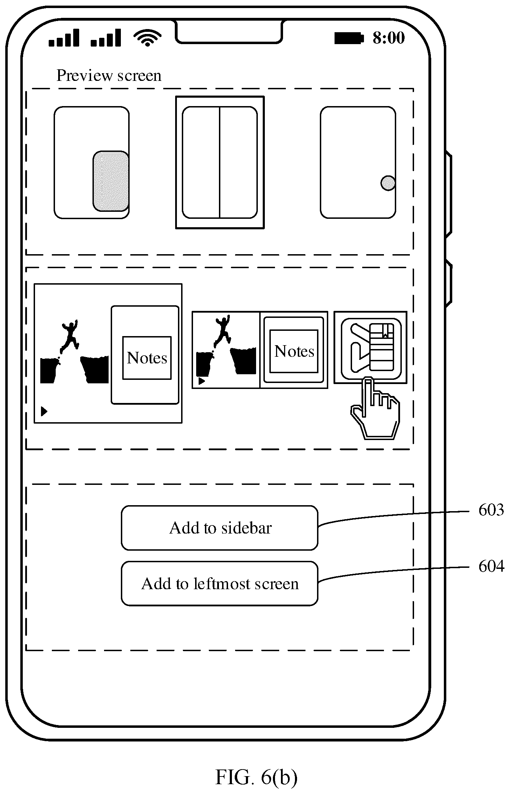

For example, as shown in FIG. 6(b), if the user selects an integrated icon in which two service icons are displayed in split screen, the fifth preview image correspondingly displays a display location at which the integrated icon can be saved in the mobile phone, for example, "Add to sidebar" 603 or "Add to leftmost screen" 604. A quantity of display locations of the quick entry is not limited in this embodiment of this application.

Similarly, in the foregoing implementations of the preview screen, after the quick entry is generated, the preview screen may automatically provide a display location of the newly generated quick entry for the user based on the generated quick entry. Alternatively, a functional button is added to the preview screen, for example, "Select a display location" (not shown in the figure). After the user taps the button, an option of a display location of the newly generated quick entry is displayed on the preview screen. A specific implementation in which the mobile phone determines the display location of the newly generated quick entry is not limited in this embodiment of this application.

Then, the mobile phone saves, based on the display location selected by the user, the quick entry to the display location selected by the user.

In this embodiment of this application, different rich and diversified options are provided based on support statuses of the electronic device, so that forms of the quick entry are increased, to help the user select a quick entry and a display location based on a requirement and met different use requirements of the user in a user-defined manner.

Optionally, the mobile phone detects whether any quick entry corresponding to a service combination included in the current multi-tasking exists at a display location (the preset display location or the target display location) of the quick entry selected by the user; and saves the newly generated quick entry according to a detection result.

In a possible implementation, the mobile phone obtains an existing quick entry at the display location selected by the user, and compares whether a service combination included in multi-tasking corresponding to a quick entry at the display location is the same as a service combination included in the current multi-tasking; if yes, it indicates that a quick entry of the service combination included in the current multi-tasking exists at the display location selected by the user; otherwise, it indicates that no quick entry of the service combination included in the current multi-tasking exists at the display location selected by the user.

Specifically, if the mobile phone detects that the quick entry corresponding to the service combination included in the current multi-tasking does not exist at the display location selected by the user, the mobile phone generates an addition option, to add the newly generated quick entry to the display location selected by the user; or if the mobile phone detects that any quick entry corresponding to the service combination included in the current multi-tasking exists at the display location selected by the user, the mobile phone generates an addition option and a replacement option, to add or replace the newly generated quick entry to the display location selected by the user.

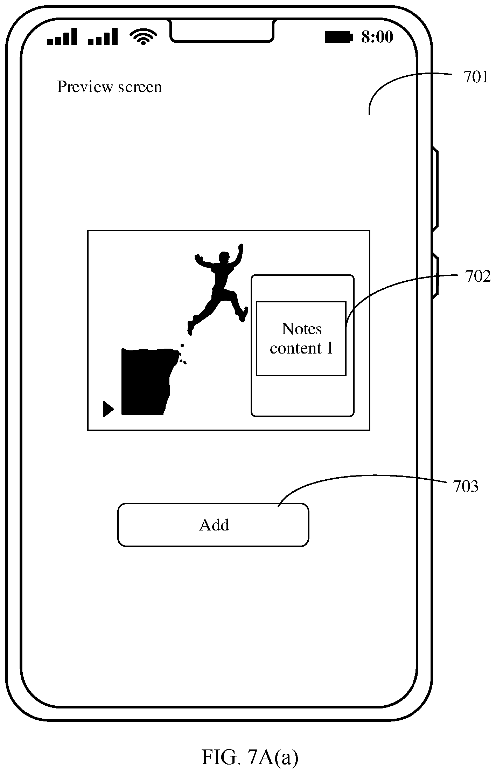

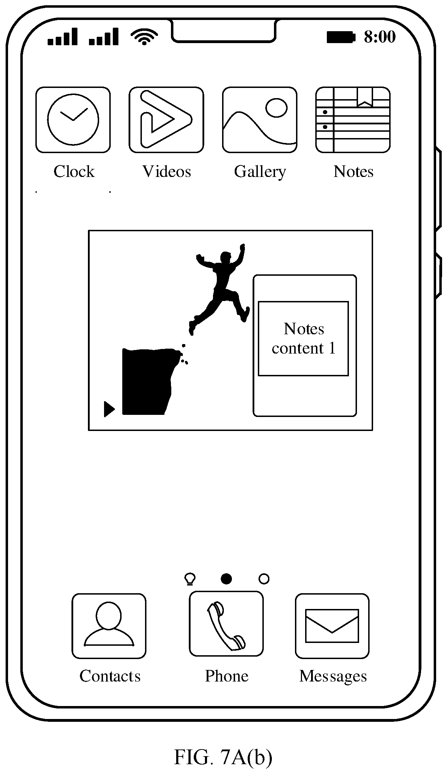

For example, based on the preview screen shown in FIG. 3B(a), it is assumed that the user selects the shortcut service widget and selects the home screen as the display location. If no quick entry of a combination of a video service and a notes service exists on the home screen, as shown in FIG. 7A(a), a preview screen 701 displays a shortcut service widget 702 and an "Add" option 703. If the user taps Add, the mobile phone adds the shortcut service widget 702 to an idle location on the home screen. The home screen of the mobile phone after the adding is shown in FIG. 7A(b).

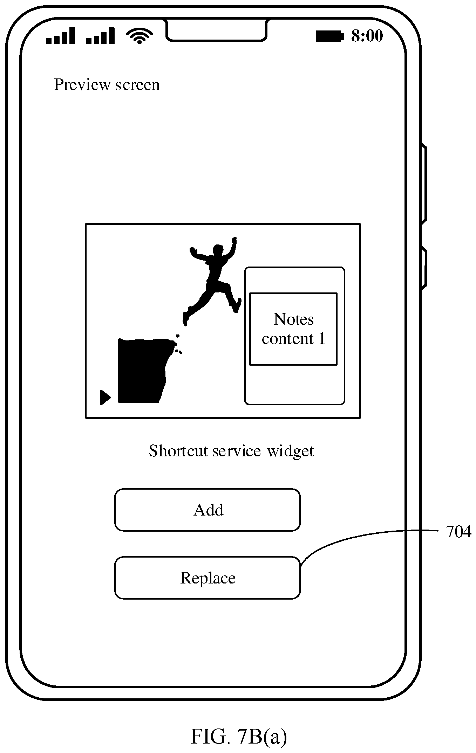

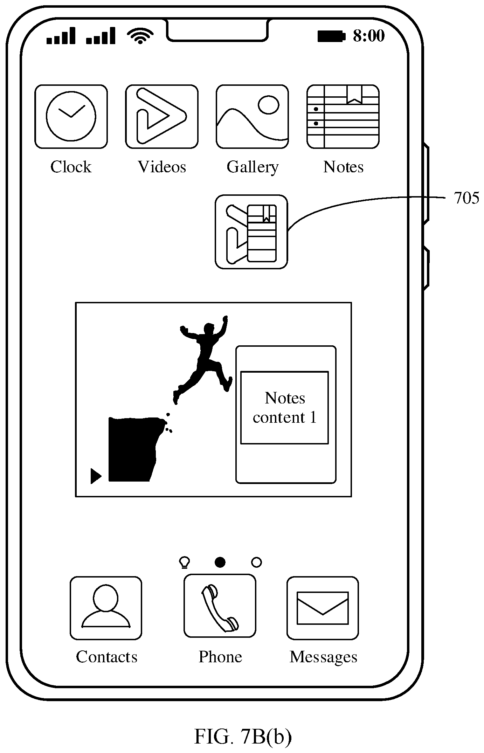

If any quick entry of a combination of a video service and a notes service exists on the home screen, as shown in FIG. 7B(a), a preview screen 701 displays a shortcut service widget 702, an "Add" option 703, and a "Replace" option 704. If the user taps Add, the mobile phone adds the shortcut service widget 702 to an idle location on the home screen. The home screen of the mobile phone after the adding is shown in FIG. 7B(b). The home screen of the mobile phone includes an original integrated icon 705 of the video service and the notes service that are displayed in split screen and the newly generated shortcut service widget 702 of the video service and the notes service. If the user taps Replace, the mobile phone replaces the original integrated icon 705 of the video service and the notes service that are displayed in split screen on the home screen with the shortcut service widget 702 of the video service and the notes service. The home screen of the mobile phone after the replacing is shown in FIG. 7A(b).

Optionally, a specific saving location of the quick entry may be any location of the display location of the quick entry. For example, as shown in FIG. 7A(b), the shortcut service widget 702 may be added to locations of icons of four applications: Clock, Videos, Gallery, and Notes. That is, the shortcut service widget 702 is located at the top of the home screen of the mobile phone, and then the icons of the four applications may be adjusted to any idle location that is not occupied by the shortcut service widget 702 on the home screen.

Similarly, after obtaining a detection result indicating whether any quick entry corresponding to the service combination included in the current multi-tasking exists at the display location of the quick entry selected by the user, the mobile phone may notify the user in a voice broadcast manner, and instruct the user to save the quick entry by using a voice.

Optionally, after saving the quick entry, the user may perform a second operation for the quick entry. The mobile phone receives the second operation, and starts, in response to the second operation, the multi-tasking corresponding to the quick entry.

In this embodiment of this application, the second operation includes various preset operations for a quick entry. Optionally, the second operation may be some shortcut operations of the user, for example, a shortcut operation in a manner of a gesture, a button combination, or the like. For example, when the quick entry is the shortcut service widget, the second operation is an operation of tapping the shortcut service widget. Alternatively, the second operation may be a voice command of the user, for example, a command for starting a quick entry that is delivered to the mobile phone through a voice assistant. A specific implementation of the second operation is not limited in this embodiment of this application.

Optionally, the mobile phone receives the second operation performed by the user on the saved quick entry, and starts, in response to the second operation, the multi-tasking according to the first status information corresponding to the quick entry.

For example, based on the home screen of the mobile phone shown in FIG. 7A(b), if the mobile phone receives the second operation input by the user, for example, the user taps the shortcut service widget on the home screen of the mobile phone, the mobile phone starts, based on status information of the video service and status information of the notes service that correspond to the shortcut service widget, multi-tasking of a combination of the video service and the notes service, where the started multi-tasking is shown in FIG. 3A(a).

Optionally, in response to the second operation for the quick entry, the electronic device starts the multi-tasking, and use status information of each service in the started multi-tasking is consistent with that before saving of the quick entry corresponding to the multi-tasking. That is, before the mobile phone saves, in response to the first operation, the quick entry corresponding to the multi-tasking, use status information of each service in the current multi-tasking is consistent with use status information of each service in the multi-tasking started by the mobile phone in response to the second operation, that is, both the information are the first status information. Although the quick entry has different forms and specifications, the use status information of each service in the multi-tasking corresponding to the quick entry remains unchanged.

Optionally, the mobile phone receives the second operation performed by the user on the quick entry, and after the multi-tasking corresponding to the quick entry is started, the user uses each service in the multi-tasking. When the user exits the multi-tasking after finishing using, the mobile phone receives an exit operation of the user, obtains and saves the use state information of each service in the current multi-tasking, and determines a comparison result of the use state information of each service in the multi-tasking before and after use.

In this embodiment of this application, the exit operation may be some shortcut operations of the user or a voice instruction of the user, for example, a shortcut operation in a manner of a gesture, a button combination, or the like, or a command for exiting the multi-tasking that is delivered to the mobile phone through a voice assistant. For example, after starting the multi-tasking, the user taps an exit button to exit the multi-tasking. A specific implementation of the exit operation is not limited in this embodiment of this application.

Optionally, for ease of description, in this embodiment of this application, the use status information that is of each service in the multi-tasking after the user uses the multi-tasking and that is obtained by the mobile phone in response to the exit operation is described as second status information. The second status information is real-time use status information of each service when the mobile phone receives the exit operation (where the real-time use status information is the use status information of each service in the multi-tasking after the user finishes using the multi-tasking).

Therefore, a comparison result of the use status information of each service in the multi-tasking before the user uses the multi-tasking and the use status information of each service in the multi-tasking after the user uses the multi-tasking is a comparison result of the first status information and the second status information.

Specifically, the comparison result of the first status information and the second status information includes any one of the following cases:
Case 1: The first status information is the same as the second status information. To be specific, services included in the multi-tasking before the user starts the quick entry are the same as services included in the multi-tasking that is started and re-saved by the user, and display status information of each service is the same as display status information of each service after the user starts and re-saves the multi-tasking.

For example, after the user saves the multi-tasking shown in FIG. 3A(a) as the shortcut service widget shown in FIG. 7A(b), the user taps the shortcut service widget. In response to the user operation, the mobile phone starts multi-tasking corresponding to the shortcut service widget. The started multi-tasking is shown in FIG. 3A(a). The multi-tasking started on the mobile phone includes the video service and the notes service, and the notes interface is displayed in a floating window in the lower right corner of the video interface. It is assumed that the user adds only one piece of new notes content to the notes in a use process. When the user finishes using the multi-tasking and taps the exit button to exit the multi-tasking, the mobile phone receives the exit operation of the user. After the use status information of the video service and the notes service in the multi-tasking after the user uses the multi-tasking is obtained and stored, the use status information of the video service and the notes service in the multi-tasking before the user uses the multi-tasking is compared with the use status information of the video service and the notes service in the multi-tasking after the user uses the multi-tasking. It is determined that the services included in the multi-tasking before and after use are both the video service and the notes service, and the user uses only the notes service and adds a piece of new notes content. In addition, the notes interface in the multi-tasking after the use is still displayed in the lower right corner of the video interface in a floating window, and a location and a size of the floating window do not change. In other words, the first status information is the same as the second status information.

Case 2: The first status information is different from the second status information. To be specific, services included in the multi-tasking before the user starts the quick entry are different from services included in the multi-tasking that is started and re-saved by the user, and/or display status information of each service is different from display status information of each service after the user starts and re-saves the multi-tasking.

Specifically, that the first status information is different from the second status information further includes any one of the following cases:
Case A: Specific services included in the multi-tasking corresponding to the first status information and the second status information are the same, but display status information of the services is different. To be specific, services included in the multi-tasking before the user starts the quick entry are the same as services included in the multi-tasking that is started and re-saved by the user, but display status information of each service is different from display status information of each service after the user starts and re-saves the multi-tasking.

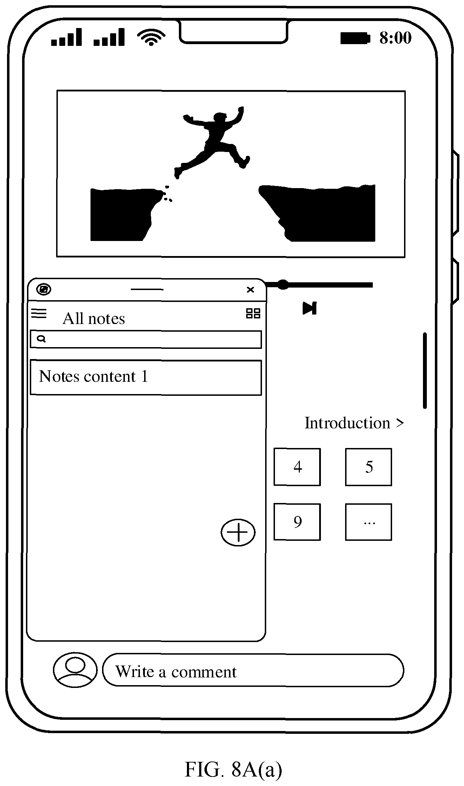

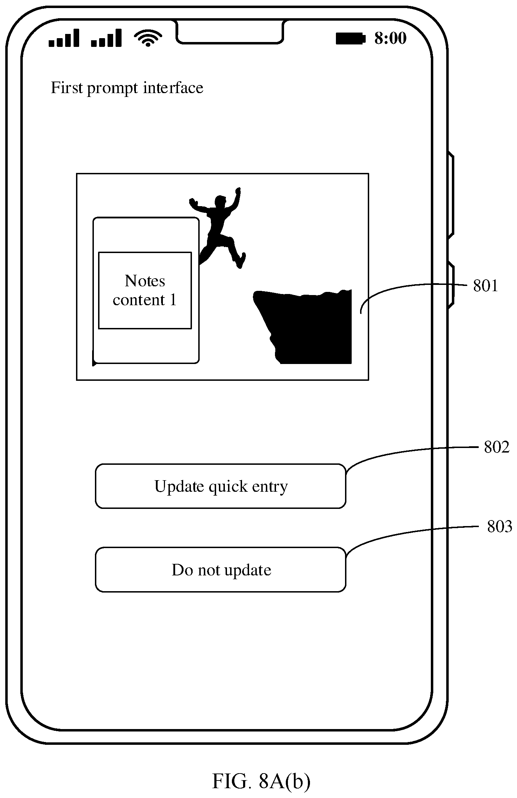

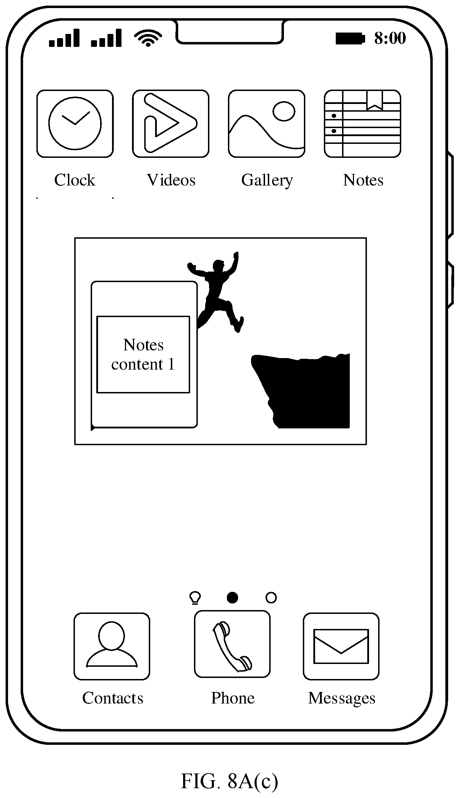

For example, the user starts and uses multi-tasking corresponding to the shortcut service widget shown in FIG. 7A(b) in Case 1. A newly started multi-tasking that is not used is shown in FIG. 3A(a), and includes the video service and the notes service. In addition, the notes interface is displayed in the lower right corner of the video interface in a floating window. After the user uses the multi-tasking, when the user taps the exit button to exit the multi-tasking, the mobile phone receives the exit operation of the user. As shown in FIG. 8A(a), a multi-tasking interface when the user exits the multi-tasking after finishing using the multi-tasking includes the video service and the notes service, but the notes interface is displayed in a lower left corner of the video interface in a floating window. The mobile phone obtains and saves use status information of the video service and the notes service in the multi-tasking after the use shown in FIG. 8A(a). The mobile phone compares the use status information of the video service and the notes service in the multi-tasking before the user uses the multi-tasking with the use status information of the video service and the notes service in the multi-tasking after the user uses the multi-tasking, and determines that services included in the multi-tasking before and after use are the same, namely, the video service and the notes service. However, the notes interface in the multi-tasking after the use is displayed in the lower left corner of the video interface in a floating window, and a location of the floating window changes. In other words, the specific services included in the multi-tasking corresponding to the first status information and the second status information are the same, but the display status information of the services is different.

Case B: Specific services included in the multi-tasking corresponding to the first status information and the second status information are different, but display status information of the services is the same. To be specific, services included in the multi-tasking before the user starts the quick entry are different from services included in the multi-tasking that is started and re-saved by the user, but display status information of each service is the same as display status information of each service after the user starts and re-saves the multi-tasking.

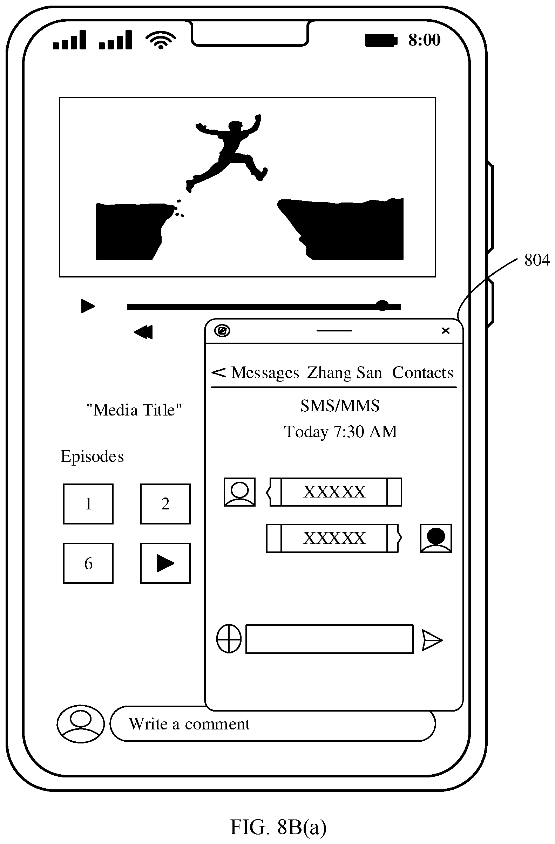

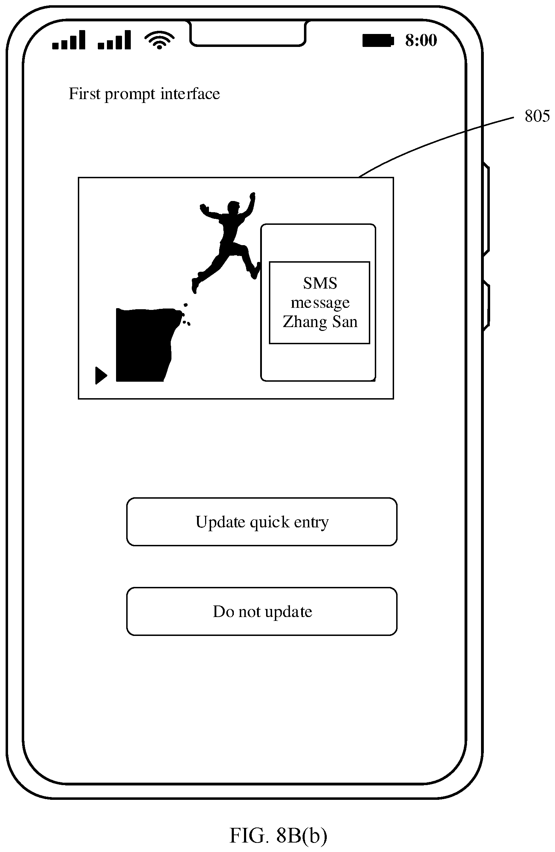

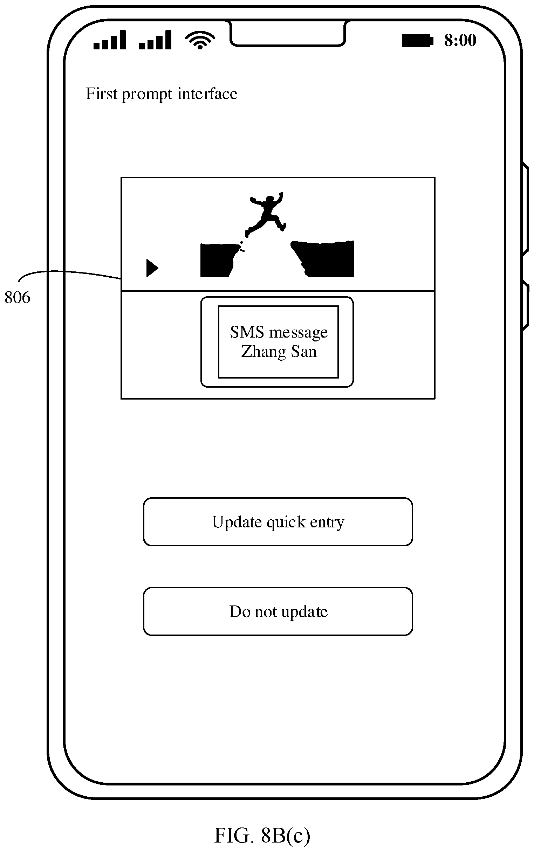

For example, the user starts and uses multi-tasking corresponding to the shortcut service widget shown in FIG. 7A(b) in Case 1. A multi-tasking that is just started but not used is shown in FIG. 3A(a), and includes the video service and the notes service. In addition, the notes interface is displayed in the lower right corner of the video interface in a floating window. After the user uses the multi-tasking, when the user taps the exit button to exit the multi-tasking, the mobile phone receives the exit operation of the user. As shown in FIG. 8B(a), a multi-tasking interface when the user exits the multi-tasking after finishing using the multi-tasking includes the video service and a messages service, and the messages interface 804 is displayed in the lower right corner of the video interface in a floating window. The mobile phone obtains and saves use status information of the video service and the messages service in the multi-tasking after the use shown in FIG. 8B(a). The mobile phone compares the use status information of the video service and the notes service in the multi-tasking before the user uses the multi-tasking with the use status information of the video service and the messages service in the multi-tasking after the user uses the multi-tasking, and determines that services included in the multi-tasking before and after use are different, where the video service remains unchanged, and the notes service is switched to the messages service. However, display status information of each service is the same before and after use. The messages interface is displayed in the lower right corner of the video interface in a floating window. A location and a size of a floating window of the messages interface after the use are the same as a location and a size of a floating window of the notes interface before the use. In other words, the specific services included in the multi-tasking corresponding to the first status information and the second status information are different, but the display status information of the services is the same.

Case C: Both specific services included in the multi-tasking corresponding to the first status information and the second status information and display status information of the services are different. To be specific, services included in the multi-tasking before the user starts the quick entry are different from services included in the multi-tasking that is started and re-saved by the user, and the display status information of each service is also different from display status information of each service after the user starts and re-saves the multi-tasking.

For example, the user starts and uses multi-tasking corresponding to the shortcut service widget shown in FIG. 7A(b) in Case 1. A multi-tasking that is just started but not used is shown in FIG. 3A(a), and includes the video service and the notes service. In addition, the notes interface is displayed in the lower right corner of the video interface in a floating window. After the user uses the multi-tasking, when the user taps the exit button to exit the multi-tasking, the mobile phone receives the exit operation of the user. As shown in FIG. 1A(d), a multi-tasking interface when the user exits the multi-tasking after finishing using the multi-tasking includes the video service and the messages service, the video service interface and the messages service interface are displayed in split screen, and each occupies a half of a display of the mobile phone. The mobile phone obtains and saves use status information of the video service and the messages service in the multi-tasking after the use shown in FIG. 1A(d). The mobile phone compares the use status information of the video service and the notes service in the multi-tasking before the user uses the multi-tasking with the use status information of the video service and the messages service in the multi-tasking after the user uses the multi-tasking, and determines that services included in the multi-tasking before and after use are different, where the video service remains unchanged, and the notes service is switched to the messages service. In addition, display status information of each service before and after use is different. Before the use, the notes interface is displayed in the lower right corner of the video interface in a floating window. After the use, the video interface and the messages interface are displayed in split screen, and each occupies a half of a display of the mobile phone. In other words, both the specific services included in the multi-tasking corresponding to the first status information and the second status information and the display status information of the services are different.

Optionally, after determining the comparison result of the first status information and the second status information, the mobile phone notifies the user of the comparison result.

In a possible implementation, the mobile phone presets corresponding voice guide instructions for different comparison results. After determining the comparison result of the first status information and the second status information, the mobile phone notifies the user of the comparison result in a voice broadcast manner, and plays a voice guide instruction corresponding to the comparison result, to guide the user to exit the multi-tasking or update the quick entry.

In another possible implementation, after determining the comparison result of the first status information and the second status information, the mobile phone may display the comparison result on the display of the mobile phone, and prompt, based on information on the display of the mobile phone, the user to exit the multi-tasking or update the quick entry.

Optionally, when the comparison result of the first status information and the second status information is that the first status information is the same as the second status information, the mobile phone directly exits the multi-tasking.

For example, as described in Case 1, if the mobile phone determines that the use status information of the video service and the notes service in the multi-tasking before the user uses the multi-tasking is the same as the use status information of the video service and the notes service in the multi-tasking after the user uses the multi-tasking, the mobile phone directly exits the multi-tasking.

Optionally, when the comparison result of the first status information and the second status information is that the first status information is different from the second status information, the mobile phone generates a first prompt interface. The first prompt interface displays a quick entry updated based on the second status information and an update option, and the quick entry is updated based on the user selection.

For example, if the comparison result is as described in the example in Case A, the specific services included in the multi-tasking corresponding to the first status information and the second status information are the same, but the display status information of the services is different. To be specific, the services included in the multi-tasking before and after use are both the video service and the notes service, but the display status information of the notes service in the multi-tasking before and after use is different. As shown in FIG. 8A(b), the mobile phone generates the first prompt interface. The first prompt interface displays a quick entry generated based on the use status information of the video service and the notes service in the multi-tasking after the use, for example, a shortcut service widget 801. A display manner of the video service and the notes service in the shortcut service widget 801 is the same as a display manner of the video service and the notes service in the multi-tasking after the use; and update options are also displayed, for example, "Update quick entry" 802 and "Do not update" 803. If the user taps "Update quick entry" 802, the shortcut service widget 801 covers the shortcut service widget shown in FIG. 7A(b). FIG. 8A(c) shows a home screen of the mobile phone after the quick entry is updated. If the user taps "Do not update" 803, the mobile phone directly exits the multi-tasking, and does not update the quick entry.

For example, if the comparison result is as described in the example in Case B, the specific services included in the multi-tasking corresponding to the first status information and the second status information is different, but the display status information of the services is the same. To be specific, the mobile phone determines that the video service and the display status information of the video service in the multi-tasking before and after use are not changed, the notes service is switched to the messages service, and the display status information of the messages service after the use is the same as the display status information of the notes service before the use. Refer to FIG. 8B(b). The mobile phone generates the first prompt interface. The first prompt interface displays a quick entry generated based on the use status information of the video service and the messages service in the multi-tasking after the use, for example, a shortcut service widget 805. A display manner of the video service and the messages service in the shortcut service widget 805 is the same as a display manner of the video service and the messages service in the multi-tasking after the use; and update options are also displayed, for example, "Update quick entry" and "Do not update". If the user taps "Update quick entry", the shortcut service widget 805 covers the shortcut service widget shown in FIG. 7A(b). If the user taps "Do not update", the mobile phone directly exits the multi-tasking, and does not update the quick entry.

For example, if the comparison result is as described in the example in Case C, both the specific services included in the multi-tasking corresponding to the first status information and the second status information and the display status information of the services are different. To be specific, the mobile phone determines that services included in the multi-tasking before and after use are different, where the video service remains unchanged, and the notes service is switched to the messages service. In addition, display status information of each service before and after use is different. Before the use, the notes interface is displayed in the lower right corner of the video interface in a floating window. After the use, the video interface and the messages interface are displayed in split screen, and each occupies a half of a display of the mobile phone. Refer to FIG. 8B(c). The mobile phone generates the first prompt interface. The first prompt interface displays a quick entry generated based on the use status information of the video service and the messages service in the multi-tasking after the use is displayed, for example, a shortcut service widget 806 in which the video service and the messages service are displayed in split screen horizontally. A display manner of the video service and the messages service in the shortcut service widget 806 is the same as a display manner of the video service and the messages service in the multi-tasking after the use; and update options are also displayed, for example, "Update quick entry" and "Do not update". If the user taps "Update quick entry", the shortcut service widget 806 in which the video service and the messages service are displayed in split screen horizontally covers the shortcut service widget shown in FIG. 7A(b). If the user taps "Do not update", the mobile phone directly exits the multi-tasking, and does not update the quick entry.

Optionally, the quick entry corresponding to the multi-tasking started by the mobile phone after the second operation is received is described as a first quick entry. When the user exits the multi-tasking after starting the multi-tasking through the first quick entry, when the user confirms to update the quick entry, the quick entry updated based on the second status information is described as a second quick entry. The first status information of the multi-tasking corresponding to the first quick entry is different from the second status information corresponding to the second quick entry.

It may be understood that, to avoid layout disorder, the updated quick entry (namely, the second quick entry) changes only specific services included in the quick entry and a display manner of each service, and does not change a form and a display location of the quick entry.

Optionally, the first prompt interface may further provide, based on a support status of the mobile phone, options of different forms, different specifications, and different display manners of services in the quick entry, for example, an option shown in any preview screen in the foregoing examples in FIG. 4(a) to FIG. 6(b), so that the user can select an updated quick entry in a user-defined manner.

In this embodiment of this application, a quick entry can be dynamically adjusted. In addition to a quick entry that the user wants for the first time, the quick entry can be continuously updated in a use process, to meet a changing requirement of the user. The use is actively prompted to refresh the quick entry, so that the user does not need to add or save the quick entry again. In this way, more steps are omitted, and more intelligent and user-friendly experience is provided.

Optionally, the foregoing uses an example in which the user actively triggers the mobile phone to save the multi-tasking as a quick entry for description. During actual application, when the user does not actively trigger saving the multi-tasking as a quick entry, the mobile phone may also actively prompt the user to save the multi-tasking as a quick entry.

Optionally, when the user exits the multi-tasking, the mobile phone actively prompts, according to a preset prompt rule, the user to save the multi-tasking as a quick entry. The preset prompt rule is a prompt rule preset by the mobile phone.

In a possible implementation, the preset prompt rule is that the user is prompted to save the multi-tasking as a quick entry when the user exits the multi-tasking. That is, each time the user exits multi-tasking, the mobile phone prompts the user to save the multi-tasking as a quick entry. For example, when the user uses multi-tasking for the first time and exits the multi-tasking, the mobile phone prompts the user to save the multi-tasking as a quick entry.

For the foregoing case, each time the user exits the multi-tasking, the mobile phone gives a prompt. Although each multi-tasking used by the user can be considered, a quantity of times of prompting is too frequent, and the user cannot be intelligently prompted. Consequently, user experience is poor. In addition, for multi-tasking that is repeatedly used, a same multi-tasking has a plurality of quick entries, causing difficulty in selecting by the user and failing to accurately start multi-tasking expected by the user.

Optionally, to reduce a quantity of prompting times, in another possible implementation, a preset prompt rule is that the user is prompted only when a quantity of times that the user uses multi-tasking is greater than a threshold. The mobile phone records each multi-tasking used by the user, and collects statistics on a quantity of times of using each multi-tasking. When the user exits multi-tasking, the mobile phone determines whether a quantity of use times of the multi-tasking is greater than the threshold; and if the quantity of use times of the multi-tasking is greater than the threshold, the mobile phone prompts the user to save the multi-tasking as a quick entry; otherwise, the mobile phone directly exits the multi-tasking. Optionally, the threshold is a value determined according to a preset value, or a value determined by the mobile phone by collecting statistics on and comparing frequencies of using the multi-tasking by the user through machine learning.

In another possible implementation, the preset prompt rule is that the user is prompted only when a quantity of times that the user uses multi-tasking is greater than a threshold and the mobile phone does not save a quick entry corresponding to the multi-tasking. When the user exits a multi-tasking, the mobile phone determines whether a quantity of use times of the multi-tasking is greater than the threshold; if the quantity of use times of the multi-tasking is greater than the threshold, the mobile phone determines whether a quick entry corresponding to the multi-tasking exists in the mobile phone; and if the quick entry corresponding to the multi-tasking is not saved in the mobile phone, the mobile phone prompts the user to save the multi-tasking as a quick entry; otherwise, the mobile phone directly exits the multi-tasking. In this implementation, it can be ensured that the saved quick entry is a quick entry that does not exist in the mobile phone. For multi-tasking that is frequently used by the user but is not saved as a quick entry, the user is actively prompted to save the multi-tasking, so that the user quickly starts the multi-tasking through the quick entry.

Optionally, when the user exits the multi-tasking, a prompt manner in which the mobile phone actively prompts, according to the preset prompt rule, the user to save the multi-tasking as a quick entry includes a voice prompt, generating a prompt interface, a pop-up prompt box, or the like.

Optionally, when the user exits the multi-tasking, if the mobile phone determines that the multi-tasking meets any one of the foregoing preset prompt rules, the mobile phone prompts the user in a voice broadcast manner, to guide the user to save the multi-tasking as a quick entry.

For example, when the quantity of use times of the multi-tasking is greater than the threshold when the mobile phone exits the multi-tasking, the mobile phone sends, to the user through the voice assistant, "The current multi-tasking is multi-tasking that you frequently use. Please choose whether to save the multi-tasking. If you want to save it, reply to save. If you do not want to save it, no reply is required". The mobile phone performs a corresponding operation based on a reply status of the user. If the reply is to save, the mobile phone may continue to instruct the user to save by using a voice instruction. If no reply is received, the mobile phone exits the multi-tasking.

Optionally, when the user exits the multi-tasking, if the mobile phone determines that the multi-tasking meets any one of the foregoing preset prompt rules, the mobile phone prompts the user in a manner of generating a second prompt interface. The second prompt interface displays a quick entry and a function option that are generated based on the multi-tasking when the user exits the multi-tasking.

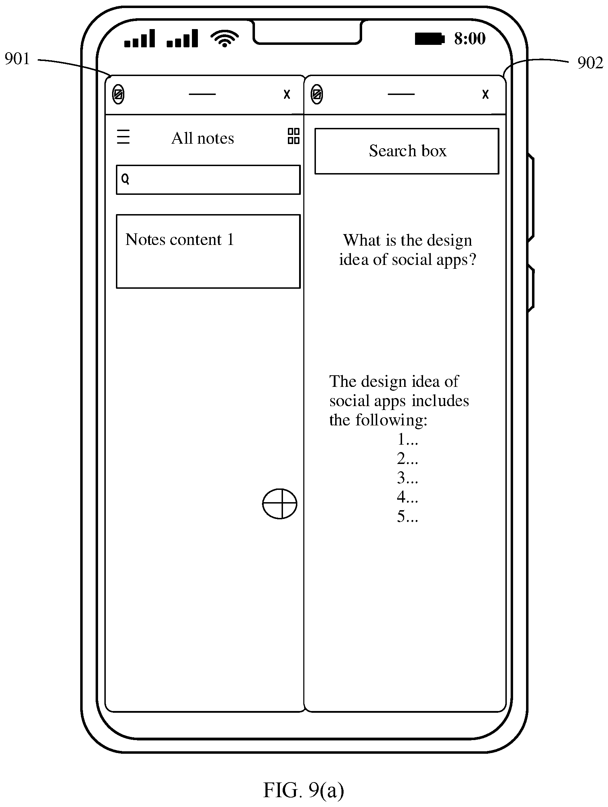

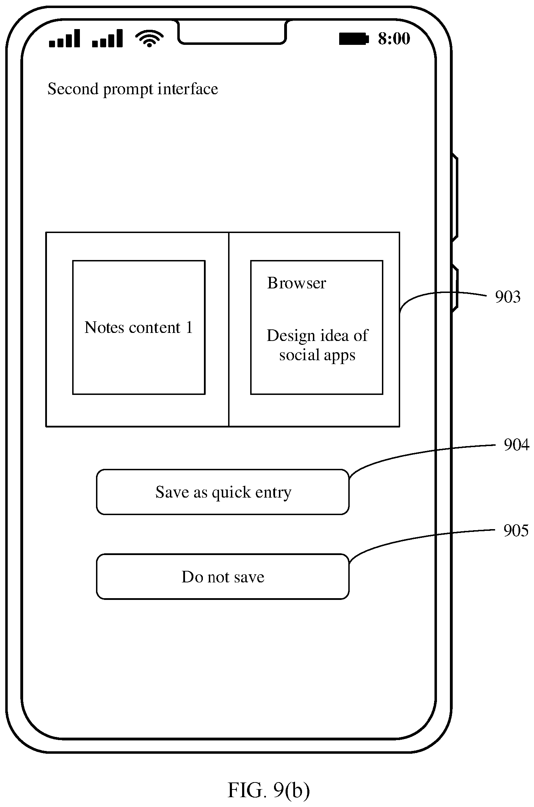

For example, FIG. 9(a) shows a multi-tasking interface when the mobile phone receives an exit operation of the user. A multi-tasking includes a notes service and a browser service. A notes interface 901 and a browser interface 902 are displayed in split screen vertically, and each occupies a half of the display of the mobile phone. When the user exits the multi-tasking, the mobile phone determines that the multi-tasking meets any one of the foregoing preset prompt rules, and generates the second prompt interface shown in FIG. 9(b). The second prompt interface displays a quick entry of a combination of the notes service and the browser service, for example, a shortcut service widget 903 in which the notes service and the browser service are displayed in split screen vertically. In addition, function options are also displayed, for example, "Save as quick entry" 904, and "Do not save" 905. If the user taps "Save as quick entry" 904, any preview screen in the examples in FIG. 4(a) to FIG. 6(b) may be jumped to, and a quick entry and a display location are selected in a user-defined manner, and are saved. If the user taps "Do not save" 905, the mobile phone exits the multi-tasking.

In this way, in the solution provided in this embodiment of this application, when the user exits the multi-tasking, the user is actively prompted, according to a preset prompt rule, to save the multi-tasking as a quick entry. For a user who does not know how to trigger saving of a quick entry, when the user exits multi-tasking, the user can be automatically prompted to save the multi-tasking as a quick entry, so that the user can quickly start the multi-tasking through the quick entry next time.

The foregoing one or more interfaces are all examples. In some other embodiments, there may be another interface design.

In some solutions, a plurality of embodiments of this application may be combined, and a combined solution is implemented. Optionally, some operations in procedures of the method embodiments are randomly combined, and/or a sequence of some operations is randomly changed. In addition, an execution sequence between steps of each procedure is merely an example, and does not constitute a limitation on the execution sequence between the steps. The steps may alternatively be performed in another execution sequence. It is not intended to indicate that the execution sequence is the only sequence in which these operations can be performed. A person of ordinary skill in the art may learn various manners of rearranging the operations described in this specification. In addition, it should be noted that process details related to an embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

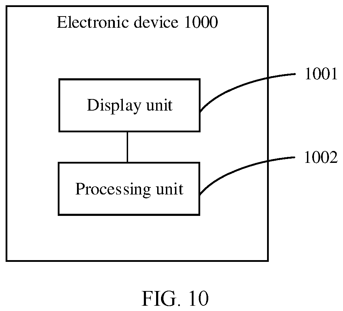

The foregoing describes in detail the multi-tasking management method provided in embodiments of this application with reference to FIG. 2 to FIG. 9(b). The following describes in detail the electronic device provided in embodiments of this application with reference to FIG. 10.

In a possible design, FIG. 10 is a diagram of a structure of an electronic device according to an embodiment of this application. As shown in FIG. 10, an electronic device 1000 includes a display unit 1001 and a processing unit 1002. The electronic device 1000 may be configured to implement functions of the electronic device in the foregoing method embodiments.

Optionally, the display unit 1001 is configured to support the electronic device 1000 in performing S202 and S203 in FIG. 2, and support the electronic device 1000 in displaying display interfaces in FIG. 3A(a) to FIG. 9(b).

Optionally, the processing unit 1002 is configured to support the electronic device 1000 in performing S201 to S203 in FIG. 2.

Optionally, the electronic device 1000 shown in FIG. 10 may further include a storage unit (not shown in FIG. 10), and the storage unit stores a program or instructions. When the display unit 1001 and the processing unit 1002 execute the program or the instructions, the electronic device 1000 shown in FIG. 10 can perform the multi-tasking management method in the foregoing method embodiments.

For technical effects of the electronic device 1000 shown in FIG. 10, refer to the technical effects of the multi-tasking management method in the foregoing method embodiments. Details are not described herein again.

In addition to a form of the electronic device 1000, the technical solutions provided in this application may also be a functional unit or a chip in the electronic device, or an apparatus that matches the electronic device.

An embodiment of this application further provides a chip system. The chip system includes a processor, the processor is coupled to a memory, and the memory is configured to store a program or instructions. When the program or the instructions is/are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory (read-only memory, ROM). The memory and the processor may be integrated on a same chip, or may be separately disposed on different chips. A type of the memory and a manner of disposing the memory and the processor are not specifically limited in this embodiment of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the multi-tasking management method in the foregoing embodiments.

An embodiment of this application further provides a computer program product. When the computer program product is run on a computer, the computer is enabled to perform the foregoing related steps, to implement the multi-tasking management method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by one or more processors, the apparatus is enabled to perform the multi-tasking management method in the foregoing method embodiments.

The apparatus, the computer-readable storage medium, the computer program product, or the chip provided in embodiments of this application is configured to perform the corresponding method provided above. Therefore, for beneficial effects that can be achieved, refer to beneficial effects in a corresponding method provided above. Details are not described herein again.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (random access memory, RAM), a flash memory, a read-only memory, an erasable programmable read-only memory (erasable programmable read-only memory, EPROM), an electrically erasable programmable read-only memory (electrically erasable programmable read-only memory, EEPROM), a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

Based on the descriptions of the foregoing implementations, a person skilled in the art may clearly understand that, for ease and brevity of description, division of the foregoing functional modules is merely used as an example for description. During actual application, the foregoing functions can be allocated to different modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments. Details are not described herein again.

In the several embodiments provided in this application, it should be understood that the disclosed method may be implemented in other manners. The described apparatus embodiments are merely examples. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The computer-readable storage medium may include but is not limited to any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A multi-tasking management method, applied to an electronic device, wherein the method comprises:
generating, by the electronic device in response to a first operation, a quick entry corresponding to multi-tasking;
displaying, by the electronic device, the quick entry corresponding to the multi-tasking; and
starting, by the electronic device, the multi-tasking in response to a second operation for the quick entry, wherein use status information of each service in the started multi-tasking is consistent with that before saving of the quick entry corresponding to the multi-tasking.

2. The multi-tasking management method according to claim 1, wherein the first operation comprises a preset operation that a user actively triggers the electronic device to generate the quick entry corresponding to the multi-tasking, and the preset operation comprises a preset shortcut operation or a preset voice command; or
the first operation comprises an operation that a user exits the multi-tasking.

3. The multi-tasking management method according to claim 2, wherein the first operation comprises the operation that the user exits the multi-tasking; and
the generating, by the electronic device in response to a first operation, a quick entry corresponding to multi-tasking comprises:
in response to the operation that the user exits the multi-tasking, prompting, by the electronic device, the user whether to generate a quick entry corresponding to current multi-tasking; and
when the user determines to generate the quick entry corresponding to the current multi-tasking, generating, by the electronic device, the quick entry corresponding to the multi-tasking.

4. The multi-tasking management method according to claim 2, wherein the first operation comprises an operation that the user starts the multi-tasking through a first quick entry and then exits the multi-tasking; and
the generating, by the electronic device in response to a first operation, a quick entry corresponding to multi-tasking comprises:
obtaining first status information and second status information, wherein the first status information is use status information of each service in the multi-tasking when the user starts the multi-tasking through the first quick entry, and the second status information is use status information of each service in the multi-tasking when the user exits the multi-tasking;
if the first status information is different from the second status information, prompting, by the electronic device, the user whether to generate a second quick entry corresponding to current multi-tasking; and
when the user determines to generate the second quick entry corresponding to the current multi-tasking, generating, by the electronic device, the second quick entry based on the second status information.

5. The multi-tasking management method according to any one of claims 1 to 4, wherein the quick entry corresponding to the multi-tasking meets at least one of the following conditions:
a form of the quick entry is a preset form;
a form of the quick entry is a form of a quick entry that is selected most frequently in a historical operation of the user; or
a form of the quick entry is a form of a saved quick entry with a largest quantity in a saved quick entry in the electronic device.

6. The multi-tasking management method according to any one of claims 1 to 4, wherein the generating, by the electronic device in response to a first operation, a quick entry corresponding to multi-tasking comprises:
generating, by the electronic device, a preview screen in response to the first operation, wherein the preview screen comprises a form of at least one quick entry; and
generating, based on a target form that is of a quick entry and that is selected by the user on the preview screen, the quick entry that is of the target form and that corresponds to the multi-tasking.

7. The multi-tasking management method according to claim 6, wherein the preview screen further comprises different specifications corresponding to quick entries of a same form; and
the generating, by the electronic device, a quick entry corresponding to multi-tasking comprises:
generating, by the electronic device based on the target form and a target specification that are of the quick entry and that are selected by the user on the preview screen, the quick entry that is of the target form and the target specification and that corresponds to the multi-tasking.

8. The multi-tasking management method according to claim 7, wherein the preview screen further comprises different display manners of each service in quick entries of a same form and a same specification; and
the generating, by the electronic device, a quick entry corresponding to multi-tasking comprises:
generating, by the electronic device, the quick entry of the target form and the target specification based on the target form and the target specification of the quick entry and a target display manner of each service in the quick entry that are selected by the user on the preview screen, wherein a display manner of each service in the quick entry is the target display manner.

9. The multi-tasking management method according to any one of claims 1 to 8, wherein the displaying, by the electronic device, the quick entry corresponding to the multi-tasking comprises:
displaying, by the electronic device at a preset display location, the quick entry corresponding to the multi-tasking; or
displaying the quick entry at a target display location based on the target display location that is selected by the user from at least one display location provided by the electronic device.

10. The multi-tasking management method according to claim 9, wherein the preset display location comprises a uniformly preset display location; or
the preset display location is a preset display location corresponding to a quick entry of each form.

11. The multi-tasking management method according to either of claims 9 and 10, wherein the displaying, by the electronic device, the quick entry corresponding to the multi-tasking comprises:
determining, by the electronic device, whether a quick entry corresponding to a service combination comprised in the current multi-tasking exists at the preset display location or the target display location; and
when the quick entry corresponding to the service combination comprised in the current multi-tasking does not exist at the preset display location or the target display location, adding, by the electronic device, the quick entry corresponding to the multi-tasking to the preset display location or the target display location.

12. The multi-tasking management method according to claim 11, wherein
when the quick entry corresponding to the service combination comprised in the current multi-tasking exists at the preset display location or the target display location, adding, by the electronic device, the quick entry corresponding to the multi-tasking to the preset display location or the target display location, or replacing, with the quick entry corresponding to the multi-tasking, the quick entry that corresponds to the service combination comprised in the current multi-tasking and that exists at the preset display location or the target display location.

13. The multi-tasking management method according to any one of claims 1 to 12, wherein the use status information of each service in the multi-tasking comprises display status information of each service in the multi-tasking and specific services comprised in the multi-tasking, and the display status information of each service in the multi-tasking comprises a display manner of each service in the multi-tasking and display interface information of each service.

14. The multi-tasking management method according to any one of claims 1 to 13, wherein the form of the quick entry comprises a service widget, an icon, or a capsule; and/or
the quick entries of the same form have different specifications; and/or
the display manner of each service in the quick entry comprises a floating window, split screen, or a floating bubble; and/or
a display location of the quick entry comprises a home screen, a lock screen, a sidebar, a status bar, a drop-down shortcut bar, a leftmost screen, or a dock area.

15. An electronic device, wherein the electronic device comprises a processor and a memory, the memory is coupled to the processor, the memory is configured to store computer-readable instructions, and when the processor reads the computer-readable instructions from the memory, the electronic device is enabled to perform the method according to any one of claims 1 to 14.

16. A chip system, comprising at least one processor and at least one interface circuit, wherein the at least one interface circuit is configured to perform a transceiver function and send instructions to the at least one processor, and when the at least one processor executes the instructions, the at least one processor performs the method according to any one of claims 1 to 14.

17. A computer-readable storage medium, wherein the computer-readable storage medium comprises a computer program, and when the computer program is run on an electronic device, the electronic device is enabled to perform the method according to any one of claims 1 to 14.

18. A computer program product, wherein when the computer program product runs on a computer, the computer is enabled to perform the method according to any one of claims 1 to 14.
